# EUROPEAN PATENT APPLICATION

(11) **EP 3 940 612 A1**
(43) Date of publication of application: **19.01.2022**
(21) Application number: 21194840.1
(22) Date of filing: 17.05.2017
(51) Int. Cl.: G06Q 10/10, G06Q 50/18, G06N 3/04, G06N 20/00, G06N 3/08, H04L 9/32

(54) **ARTIFICIAL INTELLIGENCE DATA PROCESSING SYSTEM AND METHOD**

(30) Priority: 17.05.2016 GB 201608642; 19.05.2016 GB 201608854; 19.05.2016 GB 201608855; 22.05.2016 GB 201608976
(62) Divisional of application: 17751612.7
(71) Applicant: Arctic Alliance Ltd, Cambridge CB5 8HS (GB)
(72) Inventor: AALTONEN, Janne, 20900 Turku (FI); MAJANIEMI, Jari, 20540 Turku (FI); NORRIS, Timothy, Saffron Walden, CB11 3QL (GB); BUNKE, Christian, Cambridge, CB5 8HS (GB)
(74) Representative: Basck Ltd

(57) **Abstract**

A method of operating a data management system for handling one or more documents between a plurality of user devices, wherein the data management system is operable to manage security levels in respect of the one or more documents, characterized in that the method includes receiving a first document; setting a first level of security for the first document to generate a corresponding first encrypted document; creating a second document using information derived from the first encrypted document and/or from the first document; sending the second document to at least one patent office; setting a second level of security for the second document to create a corresponding second encrypted document; retrieving publication information related to the second document from the at least one patent office; and analyzing the publication information and setting a third level of security to the second encrypted document in an event that the publication information indicates that the second document is public to create a third encrypted document, wherein the method includes operating the data management system to employ data processing hardware including an array arrangement of data processors that are operable to execute one or more artificial intelligence algorithms for implementing one or more of the steps.

## Description

### TECHNICAL FIELD

The present disclosure relates to artificial intelligence data processing systems for performing data management, for example to data processing systems that are operable to communicate various mutually different types of data and/or mutually different security classifications of data via a data communication network by employing an advanced computing architecture, for example an advanced computing architecture that is configured to implement artificial intelligence (Al) processes in its computing hardware. Moreover, the present disclosure concerns methods of operating aforementioned data processing systems, for example to methods of operating data management systems for communicating various mutually different types of data mutually different security classifications of data via a data communication network, for example an advanced computing architecture that is configured to implement artificial intelligence (Al) processes in its computing hardware. Moreover, the present disclosure relates to a method and a system for managing time-based tasks, such as tasks associated with intellectual property services, wherein the system employs an advanced computing architecture, for example configured to implement artificial intelligence (Al). Moreover, the present disclosure relates to resource management systems, for example to resource management systems that are capable of supporting intellectual property (IP) generation activities, for example for an IP management system that is operable to provide users with an option to request for offer on each stage of a patent right generating process, wherein the system is operable to employ an advanced computing architecture that is configured to implement artificial intelligence (Al) processes in its computing hardware. Moreover, the present disclosure concerns methods of operating aforementioned resource management systems. Furthermore, the present disclosure is concerned with computer program products comprising a non-transitory computer-readable storage medium having computer-readable instructions stored thereon, the computer-readable instructions being executable by a computerized device comprising processing hardware to execute aforesaid methods. It will be appreciated that various novel types of computer architecture for performing specialist computing tasks have been developed in the past and have been protected by patent rights.

### BACKGROUND

Conventionally, in data distribution systems, there arises a need to manage access rights associated with documents, and also a need to manage security levels associated with such documents. It is conventional practice to devise data management systems that employ varying degrees of encryption, with appropriate related encryption keys that are selectively distributed within the data management systems; the encryption keys assist to ensure document security, wherein the encryption keys control user-access to encrypted documents. Various designs of encoders for performing such encryption have been protected by patent rights during a period of many years, even though input data provided to such encoders are potentially abstract in nature, and the encoders merely perform bit manipulation on the input data, often without providing any data compression as such; however, such encoders are considered to provide a technical effect.

Such considerations to manage access rights associated with documents pertain to any given large organisation that is required to distribute commercially-sensitive proprietary confidential information, and is required to manage intellectual property documents; for example, such considerations pertain during a lifetime of a given patent application from:
(i) generating an initial invention report for supporting generation of the patent application;
(ii) filing the given patent application with patent authorities;
(iii) prosecuting the given patent application through substantive examination; and
(iv) finally maintaining patent rights generated at conclusion of substantive examination of the given patent application.

Thus, when creating confidential documents, there arises a need to protect the confidential documents, so that unwanted novelty-prejudicial disclosures to third parties do not occur in an even of third parties acquiring knowledge of content within the confidential documents.

An example conventional way to secure documents is to use passwords for controlling user-access to the documents. Such an approach using passwords is problematic, because there arises a need to distribute and manage the passwords to selected users. An alternative known way to ensure security of documents is to use encryption techniques in a server, as aforementioned, wherein the documents are stored in the server and access to the documents as encrypted data is provided via a secure connection layer of a data management system, wherein selected users are provided access to the secure connection layer.

Encrypting and decrypting documents in a server system and/or in a target user device requires key management and also data processing capacity in computing hardware. Typically, encrypted documents require more data storage capacity in a hard drive storage device, for example a hard disc arrangement, than required to store corresponding non-encrypted documents. Such data storage can potentially be considerable; for example, patent-related documents for a modest-sized intellectual property consultancy firm can be in a range of 10 to 100 Terabytes (TB) in data size.

Management of intellectual property rights (or services), for example patents, trademarks, and so forth, is generally a temporally lengthy and a pseudo-continuous process (namely, involving a series of actions to complete during a time period). Often, an individual or an enterprise seeking protection via intellectual property rights engages services of a trademark agent, a patent attorney or a patent agent to try to secure the intellectual property rights at an intellectual property office, for example at a governmental patent office such as the UKIPO, Patentstyret, Patentkontoret and similar. When engaging the services, the attorney or agent prepares and files requisite paperwork at the intellectual property office. Thus, a documentation lifecycle to secure and maintain intellectual property rights requires many tasks to be performed at regular intervals and therefore involves a considerable amount of communication between a given attorney and a given patent office. Predominantly, the tasks involved with managing intellectual property rights include:
(i) preparing of an application;
(ii) filing the application with intellectual property granting authorities;
(iii) responding to one or more examination reports; and
(iv) maintaining the application or rights granted in respect of the application.

Moreover, depending upon a nature of the tasks, the given patent office often specifies a date, such as a deadline for submitting a response, thereby making such tasks time-based, such that the attorney is required to complete the tasks before expiration of their deadlines. Therefore, such tasks potentially require special attention because of their associated deadlines, and it is potentially desirable for the attorney to seek assistance from a third party service provider to perform such time-based tasks before their deadlines pass.

Presently, there exist various ways in which third party service providers are potentially able to pro-actively offer their assistance to attorneys, for example to patent attorneys. For example, the third party service providers optionally employ marketing letters, Client Relationship Management (CRM) systems, and so forth, to contact attorneys. Known ways to offer assistance, namely by the service providers to the attorneys, are typically based upon information that is available in the public domain, and such assistance potentially does not take into consideration time-based tasks for which the attorneys potentially require assistance; for example, scant information is usually available in a period between filing a given patent application and the given patent application being published at 18 months after its earliest priority date. Moreover, the known ways to offer assistance are often not flexible enough to accommodate the time-based tasks having potentially very critical deadlines (such as close deadlines or immovable deadlines such as end-of-priority year (Art 4A/4C Paris Convention)). For example, if due to any reason, the attorney forgets, or very lately realizes, about such time-based tasks, in such circumstances, the known ways to offer assistance are potentially not effective to attend to such time-based tasks. Therefore, in view of the foregoing discussion, there exists a need to overcome the aforementioned drawbacks associated with managing resources for executing time-based tasks.

Conventionally, as aforementioned, known approaches for service providers to offer proactively help in respect of patent-right-generating processes rely upon using public information. For example, a published PCT (Patent Co-operation Treaty) patent application is a public document; the published PCT patent application includes information indicative of one or more inventors, an assignee and an agent handling the PCT patent application. The aforementioned information can be used to create a direct marketing letter or can be used as input data for a CRM system (namely, a *"customer relationship management system*") to start contacting appropriate parties to offer help, for example in respect of a 30- or 31-month deadline (after earliest priority date) for transition of the PCT patent application to corresponding national and/or regional patent applications; however, it will be appreciated that PCT patent applications can optionally enter into national or regional phase before the 30- or 31-month deadline expires, for example in an event of a patent applicant requiring to establish patent rights as quickly as possible for commercial reasons. Similarly, every public patent application that becomes public 18 months from its earliest priority date, has information that can be used as a basis for a customer relationship management (CRM) system for contacting appropriate parties involved.

Moreover, in substantive examination of a given patent application, namely in the *"patenting process"* for the given patent application, there are deadlines that cannot be missed, whereas other deadlines incur severe financial penalties if exceeded without corresponding work and associated submissions being done. The deadlines correspond to substantive work that has to be implemented for the given patent application. Often, it is desirable from a viewpoint of a patent attorney firm or patent assignee, for example in a case where an inventor company has filed a patent application themselves, that an offer therefrom is provided to offer service of helping with address substantive issues associated with the deadline in respect of the given patent application. As aforementioned, a problem encountered from a viewpoint of a service provider is that some of the deadlines in an early phase of the aforementioned patenting process are non-public, and thus the service provider cannot proactively offer help related to the deadlines pertaining to the given patent application in the early phase.

Various technical systems for providing a framework for processing tasks are known; for example, various proprietary case manage software is available that is susceptible to being executed upon convention known computing hardware. Such technical systems are usually configured to make their operation optimally suited for processing certain specific types of task. However, for certain categories of task, it is still established conventional practice to process tasks manually, or by using a plurality of smaller systems that do not mutually interact. However, such known technical systems tend not to perform well when presented with a broad range of complex tasks, for example as encountered when providing intellectual property (IP) procurement and enforcement services.

Establishing patent rights is a complex process, commencing with generation of invention reports, preparation of patent applications from disclosure in the invention reports, processing the patent applications through substantive examination to grant of patent rights, and then maintaining the patent rights after grant. Occasionally, granted patents are subject to third-party opposition proceedings or even revocation proceedings. Thus, conventional processes for establishing patent rights, *mutatis mutandis* other types of intellectual property rights such as trademark rights and design rights, require a plurality of mutually different type of tools, such as:
(i) docketing;
(ii) invention report management;
(iii) workflow management; and also
(iv) front end user interfacing for customers to contact patent attorney firms.

Conventionally, such tools have been implemented manually in small patent practices, hereinafter referred to as *"cottage industry"* firms. However, such an approach is outdated and inefficient, when other branches of manufacturing industry and service industries are automating to reduce costs, to ensure more predictable product or service quality and to provide more prompt delivery of manufactured products and/or services.

In the United Kingdom, and many other European countries, intellectual property firms are often run in a manner of *"Dickensian"* cottage industries, wherein highly-paid patent attorneys are involved with performing a large spectrum of tasks, often without support from colleagues; other industries have adapted to task-specialization long ago, to improve efficiency and productivity (Adam Smith et al., "Division of Labour", from "An Inquiry into the Nature and Causes of the Wealth of Nations", (1776),). Such practice in conventional intellectual property firms often results in an unpredictable quality of service to customers, a lack of peer-review of implemented work by attorneys, and a lack of proper quality-control procedures; in contradistinction, manufacturing industry has become accustomed to quality control procedures long ago. In short, whereas other branches of industry have become streamlined for efficiency and employ global component procurement, conventional intellectual property firms are often archaic, inefficient and over-priced. Moreover, various patent attorney supporting organisations such as Chartered Institute of Patent Agents (CIPA) have earlier tried to restrict (i.e. establish as a *"closed shop"* regime) attorney numbers in order to try to keep patent attorney salaries at a high level, whereas other organisations such as the European Patent Office (EPO) and the Licensing Executive Society (LES) have efficiently and impressively promoted learning and education in intellectual property matters in a very positive manner. Such organizations promoting a *"closed shop"* regime are archaic and obstructive to procurement of IPR.

In recent years, there has been considerable development in artificial intelligence (Al) systems that mimic cognitive processes of human beings. It is estimated that many complex clerical tasks will in future be managed by Al systems, resulting in automation that will displace jobs. On account of costly patent attorneys performing routine tasks in the aforementioned *"cottage industry"* of small IP firms that presently pertains (for example in the United Kingdom, due to ineffectiveness and *"closed shop"* practices that were earlier promoted by organisations such as CIPA), use of Al is potentially technologically highly disruptive. However, so far, use of Al tools in intellectual property matters has been relatively modest.

It will be appreciated that the UKIPO and EPO readily grant patent rights for inventions such as encoders and decoders that merely switch data bits in data to be encoded and correspondingly decode, even when the input data to be encoded is of an abstract nature (for example, computer-generated graphics) and not captured by sensor devices such as cameras, and yet has difficulty in granting patents for advanced Al systems, even when such Al systems correspond effectively to new configurations of computer systems. In the past, patent rights have been granted for new computer architectures.

### SUMMARY

The present disclosure seeks to provide an improved system for use in interfacing with IP specialists, for providing support to such specialists, and for lowering a cost of procuring IP rights, yet maintaining a consistent and high standard in the delivery of associated services from the IP specialists, for example patent attorneys, patent advisors and similar, for example by employing artificial intelligence (Al) based services.

Moreover, the present disclosure seeks to provide an improved method of using aforementioned systems for providing advanced IP services, for example by employing artificial intelligence (Al) based services.

In a first aspect, embodiments of the present disclosure provide a method of operating a data management system for handling one or more documents between a plurality of user devices, wherein the data management system is operable to manage security levels (L1, L2, L3) in respect of the one or more documents, characterized in that the method includes:
(i) receiving a first document;
(ii) setting a first level of security (L3) for the first document to generate a corresponding first encrypted document;
(iii) creating a second document using information derived from the first encrypted document and/or from the first document;
(iv) sending the second document to at least one patent office;
(v) setting a second level of security (L2) for the second document to create a corresponding second encrypted document;
(vi) retrieving publication information related to the second document from the at least one patent office; and
(vii) analyzing the publication information and setting a third level (L1) of security to the second encrypted document in an event that the publication information indicates that the second document is public to create a third encrypted document,
wherein the method includes operating the data management system to employ data processing hardware including an array arrangement of data processors that are operable to execute one or more artificial intelligence (Al) algorithms for implementing one or more of the steps (i) to (vii).

Optionally, the method includes arranging for the data management system to include a server arrangement for storing document and encrypted documents, wherein the server arrangement is coupled to the plurality of user devices via a data communication network arrangement.

Optionally, the method includes arranging for the data management system to use one or more encryption keys that are communicated to or generated by the user devices for encrypting and/or decrypting documents.

Optionally, the method includes arranging for the data management system to employ an encryption method including partitioning one or more data files into a plurality of data blocks, to encrypt the data blocks to generate corresponding encrypted data blocks and to obfuscate the encrypted data blocks by mutually swapping data therebetween to generate corresponding encrypted data, wherein a data map is also generated to define partitioning, encryption and obfuscation employed to generate the corresponding encrypted data to enable the encrypted data to be subsequently de-obfuscated, decrypted and de-partitioned to regenerate corresponding decrypted data of the one or more data files.

More optionally, the method includes communicating the data map in encrypted form within the data management system.

Optionally, the method includes providing the user devices with detectors for detecting malware present in the users' devices that is capable of circumventing encryption of data executed by the user devices.

Optionally, the method includes arranging for the data management system to be configured for drafting revising and submitting patent application documents to one or more patent offices.

Optionally, the method includes arranging for the data management system to employ the one or more artificial intelligence (Al) algorithms to analyze the publication information and/or to control the levels of security of the data management system, wherein the data management system is operable to employ a configuration of pseudo-analog variable-state machines having states defined by a learning process applied to the pseudo-analog variable-state machines, and the configuration of pseudo-analog variable-state machines is implemented by disposing the pseudo-analog variable-state machines in a hierarchical arrangement, wherein pseudo-analog variable-state machines higher in the hierarchical arrangement are operable to mimic behavior of a human claustrum for performing higher cognitive functions when processing the publication information and/or controlling the levels of security of the data management system.

In another aspect of the present disclosure, there is provided a computer program product comprising a non-transitory (namely non-transient) computer-readable storage medium having computer-readable instructions stored thereon, the computer-readable instructions being executable by a computerized device comprising processing hardware to execute the aforementioned methods pursuant to the aforementioned aspects.

Additional aspects, advantages, features and objects of the present disclosure would be made apparent from the drawings and the detailed description of the illustrative embodiments construed in conjunction with the appended claims that follow.

### DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and apparatus disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
- FIG. 1: is a schematic illustration of a data management system pursuant to the present disclosure;
- FIG. 2: is a flow chart depicted steps of a method of operating the data management system of FIG. 1;
- FIG. 3: is a schematic illustration of a system for managing a time-based task, in accordance with an embodiment of the present disclosure;
- FIG. 4: is an illustration of operational steps of the system of FIG. 3, in accordance with an embodiment of the present disclosure;
- FIG. 5: is an illustration of operational steps of the system of FIG. 3, in accordance with another embodiment of the present disclosure;
- FIG. 6: is a schematic illustration of a user interface rendered on a communication device associated with a service allocator, in accordance with an embodiment of the present disclosure;
- FIG. 7: is an illustration of steps of a method for managing a time-based task, in accordance with an embodiment of the present disclosure;
- FIG. 8: is a schematic illustration of steps of a method of using a resource management system, for example implemented as an IP management system;
- FIG. 9: is an example reminder communication from a resource management system, for example an IP management system, wherein a link or other access to service provider offering is included as a part of the reminder communication;
- FIG. 10: is an illustration of a resource management system pursuant to the present disclosure;
- FIG. 11: is a schematic illustration of task control system of the present disclosure;
- FIG. 12: is a schematic illustration of an alternative implementation of a task control system of the present disclosure;
- FIG. 13: is a schematic illustration of a pricing structure for work products implemented via the task control system of FIG. 11;
- FIG. 14: is a schematic illustration of an anatomical structure of a human brain;
- FIG. 15: is a schematic illustration of a layered processing structure of a cognitive artificial intelligence (Al) computing engine pursuant to the present disclosure;
- FIG. 16: is an illustration of a node of a layer of the layered processing structure of FIG. 15, wherein the node is implemented using a data processing device of an interconnected array of such data processing devices; and
- FIG. 17: is illustration of a pseudo-analog variable state diagram of the cognitive artificial intelligence (Al) computing engine of FIG. 15.

In the accompanying diagrams, an underlined number is employed to represent an item over which the underlined number is positioned or an item to which the underlined number is adjacent. A non-underlined number relates to an item identified by a line linking the non-underlined number to the item.

### DETAILED DESCRIPTION OF EMBODIMENTS

In the following detailed description, illustrative embodiments of the present disclosure and ways in which they can be implemented are elucidated. Although some modes of carrying out the present disclosure is described, those skilled in the art would recognize that other embodiments for carrying out or practicing the present disclosure are also possible.

According to an aspect of the present disclosure, there is provided a data management system for handling one or more documents between a plurality of user devices, wherein the data management system is operable to manage security levels (L1, L2, L3) in respect of the one or more documents, characterized in that the data management system is operable:
(i) to receive a first document;
(ii) to set a first level of security (L3) for the first document to generate a corresponding first encrypted document;
(iii) to create a second document using information derived from the first encrypted document and/or from the first document;
(iv) to send the second document to at least one patent office;
(v) to set a second level of security (L2) for the second document to create a corresponding second encrypted document;
(vi) to retrieve publication information related to the second document from the at least one patent office; and
(vii) to analyze the publication information and setting a third level (L1) of security to the second encrypted document in an event that the publication information indicates that the second document is public to create a third encrypted document.

The data management system is of advantage in that it is capable of providing for more reliable security management of documents, and provides for more efficient generation, revision and filing of documents with document receiving authorities, for example one or more patent offices.

Optionally, the data management system includes a server arrangement for storing document and encrypted documents, wherein the server arrangement is coupled to the plurality of user devices via a data communication network arrangement.

Optionally, the data management system is operable to use one or more encryption keys that are communicated to or generated by the user devices for encrypting and/or decrypting documents.

Optionally, the data management system is operable to employ an encryption method including partitioning one or more data files into a plurality of data blocks, to encrypt the data blocks to generate corresponding encrypted data blocks and to obfuscate the encrypted data blocks by mutually swapping data therebetween to generate corresponding encrypted data, wherein a data map is also generated to define partitioning, encryption and obfuscation employed to generate the corresponding encrypted data to enable the encrypted data to be subsequently de-obfuscated, decrypted and de-partitioned to regenerate corresponding decrypted data of the one or more data files.

More optionally, in the data management system, the data map is communicated in encrypted form within the data management system.

Optionally, in the data management system, the user devices are provided with detectors for detecting malware present in the users' devices that is capable of circumventing encryption of data executed by the user devices.

Optionally, the data management system is configured for drafting revising and submitting patent application documents to one or more patent offices. Optionally, the data management system is operable to employ one or more artificial intelligence algorithms to analyze the publication information and/or to control the levels of security of the data management system.

According to another aspect of the present disclosure, there is provided a method of operating a data management system for handling one or more documents between a plurality of user devices, wherein the data management system is operable to manage security levels (L1, L2, L3) in respect of the one or more documents, characterized in that the method includes:
(i) receiving a first document;
(ii) setting a first level of security (L3) for the first document to generate a corresponding first encrypted document;
(iii) creating a second document using information derived from the first encrypted document and/or from the first document;
(iv) sending the second document to at least one patent office;
(v) setting a second level of security (L2) for the second document to create a corresponding second encrypted document;
(vi) retrieving publication information related to the second document from the at least one patent office; and
(vii) analyzing the publication information and setting a third level (L1) of security to the second encrypted document in an event that the publication information indicates that the second document is public to create a third encrypted document.

Optionally, the method includes arranging for the data management system to include a server arrangement for storing document and encrypted documents, wherein the server arrangement is coupled to the plurality of user devices via a data communication network arrangement.

Optionally, the method includes arranging for the data management system to use one or more encryption keys that are communicated to or generated by the user devices for encrypting and/or decrypting documents.

Optionally, the method includes arranging for the data management system to employ an encryption method including partitioning one or more data files into a plurality of data blocks, to encrypt the data blocks to generate corresponding encrypted data blocks and to obfuscate the encrypted data blocks by mutually swapping data therebetween to generate corresponding encrypted data, wherein a data map is also generated to define partitioning, encryption and obfuscation employed to generate the corresponding encrypted data to enable the encrypted data to be subsequently de-obfuscated, decrypted and de-partitioned to regenerate corresponding decrypted data of the one or more data files.

More optionally, the method includes communicating the data map in encrypted form within the data management system.

Optionally, the method includes providing the user devices with detectors for detecting malware present in the users' devices that is capable of circumventing encryption of data executed by the user devices.

Optionally, the method includes arranging for the data management system to be configured for drafting revising and submitting patent application documents to one or more patent offices.

Optionally, the method includes arranging for the data management system to employ one or more artificial intelligence algorithms to analyze the publication information and/or to control the levels of security of the data management system. In overview, the present disclosure is concerned with data management systems, more particularly to data management systems that are operable to manage communication of intellectual property documents from and to one or more users of the data management system. The data management system is conveniently, for example, hosted via the Internet operating pursuant to TCP/IP, although not limited thereto; for example, embodiments of the present disclosure can be implemented on custom data communication networks, for example secure data communication network supported via the Internet, for example data communication networks to a security standard approaching a one-time pad or quantum computing level security. For example, embodiments of the present disclosure are capable of preventing eavesdropping by rogue and corrupt governmental organizations, as well as spying by rogue and corrupt corporate organizations.

Thus, the present disclosure is concerned with data management systems for managing document rights and security levels. Moreover, embodiments of the present disclosure are concerned with methods of managing patent and other intellectual property documents during a lifetime of one or more patent applications from generating one or more initial invention reporting progression of the one or more patent applications, filing the one or more patent applications, prosecution the one or more patent applications and maintaining patent rights granted in respect of the one or more patent applications. In such a scenario, it will be appreciated that the data management system is a hierarchical/layered security system, wherein one or more security levels change depending on a stage of a given patent application in its substantive examination and granting process; such change arises, for example, on account of patent applications being published circa 18 months after their earliest priority date (Art 4A/C Paris Convention) and thereby becoming publicly-accessible documents.

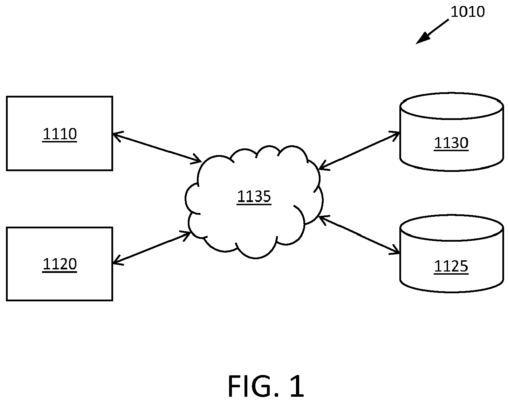

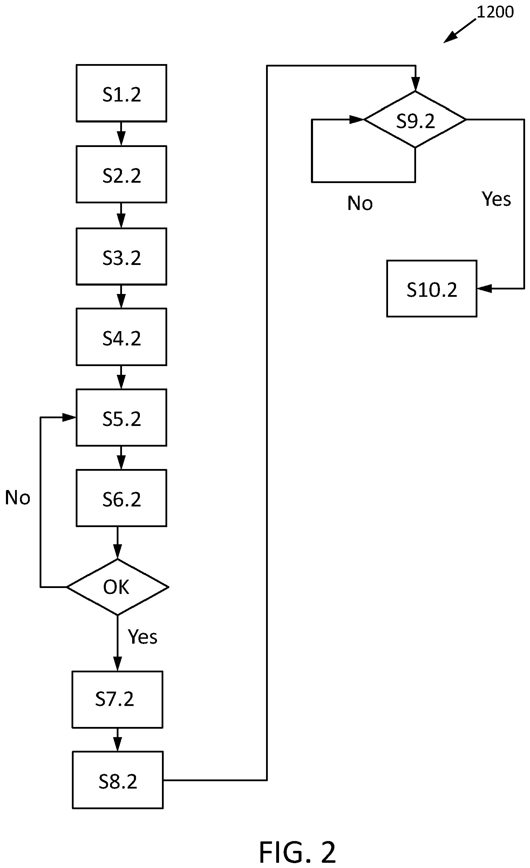

In Fig. 1, there is shown an illustration of a data management system of the present disclosure, indicated generally by **1010;** the illustration corresponds to a high level system. A first user terminal **1110** of the data management system **1010** is used by an inventor. A second user terminal **1120** of the data management system **1010** is used by a patent attorney. The user terminal **1120** can be a laptop computer, a smart phone, a web pad, a phablet or similar computing device having a graphical user interface (GUI). An intellectual property management system (IPMS) **1125** is implemented as a server arrangement, for example including one or more servers, a cloud computing service, and similar. A patent office database system (IPODB) **1130** is implemented as one or more servers operated by a patent office; optionally, the patent office database system (IPODB) **1130** corresponds to a plurality of patent offices. The user terminals **1110, 1120** can connect to the IMPS **1125** and IPODB **1130** via a data communication network **1135,** for example via the Internet^{®} operating pursuant to TCP/IP or via a wireless telephone network. The data management system **1010** employs a method of operation that enables documents to be amended, communicated securely and selectively exchanged between user terminals of the data management system **1010.** The method includes steps as depicted in FIG. 2, and is indicated generally by **1200.** In a step S1.2 of the method **1200,** the inventor writes an invention disclosure and uploads it via the data communication network **1135** to the intellectual property management system (IPMS) **1125** over a secured communication channel such as HTTPS (hyper text transfer protocol secure). Alternatively, other types of secure channels can be employed, for example a communication channel arrangement that achieves a high degree of data security by employing partitioning of data files into corresponding data blocks, encrypting the data blocks to provide corresponding encrypted data blocks, and then obfuscating the encrypted data blocks by mutually swapping data therebetween; data block partitioning employed, encryption methods employed and obfuscation methods employed are recorded in a data map that is heavily encrypted within the data management system **1010,** wherein the data map enables the data files to be regenerated when the encrypted data map, and the obfuscated encrypted data blocks are received. Moreover, the user terminals **1110, 1120** are provided with malware protection monitoring devices that prevents malware from being active in the user terminals **1110, 1120** from monitoring such data processing involved with partitioning data files into data blocks, encrypting and data blocks and obfuscating the encrypted data blocks, *mutatis mutandis* when the data map is decrypted and then used to de-obfuscate obfuscated encrypted data blocks, to decrypt the encrypted data blocks and to recombine the data blocks to regenerate the data files. Yet alternatively, the users terminals **1110, 1120** are operable to perform such data partitioning, encryption and obfuscation when off-line (for example in "*flight mode*") to prevent third party monitoring via malware. Optionally, the user terminals **1110, 1120** are operable to employ a Harvard-type processing architecture that is robust against virus and malware attack. Harvard-type architecture concerns partitioning of data and address working spaces into separate regions in computer memory. By employing such an approach, a security level approaching a one-time pad or quantum computing is capable of being achieved and substantially impossible for any eavesdropping organization to break, even using the World's most powerful computing tools.

In a step S2.2 of the method **1200,** the data files corresponding to the invention disclosure are further encrypted either before uploading those or at the IPMS **1125.** For example, for the encrypting the data files corresponding to the invention disclosure, various encryption algorithms can be used. In embodiments of the present disclosure, the encryption algorithms are grouped based upon their security level of level L0 = no security, L1 = low level security, L2 = medium level security, and L3 = high level security; the example the aforementioned data partitioning, encryption and obfuscation, in combination with use of an encrypted data map, is beneficially employed to provide the L3 level security. The security levels can for example correspond to number of bits used on encrypting or complexity of the encryption method, for example as aforementioned. The levels can also correspond to one or two step verifications where one step is considered a lower level than a two-step verification. A two-step verification can refer on asking for a password, and sending over via a short message service (SMS) an additional security code for opening a given patent document.

In a Step S3.2 of the method **1200,** the patent attorney downloads the invention disclosure from the IPMS **1125** to the user terminal **1120,** wherein the patent attorney has been given access to the invention disclosure stored in the IPMS **1125.**

In a Step S4.2 of the method **1200,** the invention disclosure is decrypted in the user terminal **1120** after downloading or in the IPMS **1125** before downloading, depending on the security level and settings. Preferably, in such a phase, namely distributing and working with the invention disclosure, the highest security level is used in information exchange, namely sending back and forth invention report and draft versions of a patent application draft. It will be appreciated that communication using standard e-mail using unencrypted attachments via the Internet is far from secure in view of various data mining, cookies and other types of software active on the Internet.

In a Step S5.2 of the method **1200,** the patent attorney uploads the patent draft to the IPMS **1125** using a high security level setting for the inventor to review. In a Step S6.2 of the method **1200,** the inventor downloads the draft version of a patent application draft from the IMPS **1125** for review and comments. The draft version of a patent draft is iterated between the inventor and the patent attorney until a patent application draft for filing is ready.

In a Step S7.2 of the method **1200,** the patent application for filing is filed to the patent office database (IPODB) **1130** via the communication network **1135.** The patent application is allocated a patent application number. The text and figures of the patent application, at this stage, have security level L0 since the patent office needs to have access to the files and has to be able to read those text and figures.

In a Step S8.2 of the method **1200,** since the text and the figures are now in addition to the IMPS **1125** in the IPODB **1130,** a security level of the text and the figured of the patent application draft can be changed to a security level lower than used previously for example to layer L2. This is advantageous because a lower level of encryption of the documents in the IMPS **1125** requires less memory in the database system and also reduces communication resources needed to decrypt the document should decryption be needed.

In the aforementioned embodiments of the present disclosure, the prosecution process is split to two different phases:
(i) Phase 1 = a non-public phase; and
(ii) Phase 2 = a public phase.

Typically, the non-public phase 1 is 18 months from the date of filing the patent application, or a first in a series of related patent applications that are mutually related. In the embodiments of the present disclosure, the security level L2 is maintained in the IMPS **1125** during this the Phase 1.

In a Step S9.2 of the method **1200,** the IMPS **1125** checks the IPODB **1130** at preset times or regularly or randomly, in order to determine whether or not the patent application has been published.

In a Step S10.2 of the method **1200,** if it is clear from data from the IPODB **1130** that the patent application has been published, then there is not a need to maintain L2 level security in the documents as filed. The security level in the IPMS **1125** can be changed for the respective documents to L1 or L0. This will further reduce communication resource need in the IMPS **1125,** an amount of storage based needed and also reduces need to manage encryption keys for the files related to the published patent application. This way, for example if the patent attorney changes or the inventor changes company, the files can be opened by anyone who has credentials to the IMPS **1125.**

It will be appreciated from the foregoing that execution of the method **1200** in the data management system **1010** with document storage capabilities provides for more efficient and secure procedure, thereby saving resources, reducing cost and potentially reducing a potential risk of any errors being made (for example inadvertent unintended public disclosure).

In an aspect of the present disclosure, there is provided a method of managing a time-based task, the method comprising:
(i) populating a database with an intellectual property related data, comprising at least a first deadline date and a deadline type, associated with the time-based task;
(ii) calculating a second deadline based on the first deadline;
(iii) sending a request for a service based on the deadline type;
(iv) receiving a service description related to the request;
(v) making a communication using the received service description; and
(vi) performing the time-based task by the second deadline.

In another aspect of the present disclosure, there is provided a system for managing a time-based task, the system comprising:
(i) at least one communication device associated with at least one service allocator;
(ii) at least one communication device associated with at least one service provider; and
(iii) a server communicably coupled to the at least one communication device of the at least one service allocator and the at least one service provider, wherein the server is configured:
   (a) to populate a database with an intellectual property related data, comprising at least a first deadline date and a deadline type, associated with the time-based task,
   (b) to calculate a second deadline based on the first deadline,
   (c) to send a request for a service based on the deadline type,
   (d) to receive a service description related to the request,
   (e) to make a communication using the received service description, and
   (f) to perform the time-based task by the second deadline.

In an embodiment, the at least one communication device associated with the at least one service allocator and the at least one service provider include, but are not limited to: a smart phone, a tablet computer, a laptop computer, a desktop computer and a personal digital assistant.

In an embodiment, the term *"service allocator"* used herein relates to a person (such as an attorney or an agent) engaged by a client (such as an individual inventor, a group of inventors or an enterprise) to handle procedures associated with obtaining intellectual property rights for the client. Specifically, the service allocator communicates with the client, and acquires work or tasks (related to securing intellectual property rights) from the client. Thereafter, the service allocator completes the work or tasks himself/herself or takes assistance of a service provider (explained in greater detail herein later).

In an embodiment, the communication device associated with the at least one service allocator is optionally configured to include an Intellectual Property management module (hereinafter referred to as *'IP management module*'). The term *"IP management module"* optionally relates to a software or a combination of a software and a hardware, used by the service allocator for managing intellectual property tasks at his/her end for his/her client. In one embodiment, the IP management module is optionally a Microsoft^{®} word^{®} document or a Microsoft^{®} excel^{®} sheet including the intellectual property related data, otherwise IP management module is optionally a (customer relationship management) CRM system including the intellectual property related data.

In one embodiment, the IP management module is optionally stored on a server. In such an instance, the communication device optionally comprises an access module to access the IP management module on the communication device from the server.

In one embodiment, the term "service provider" used herein relates to an entity having expertise in performing tasks associated with intellectual property services.

Furthermore, the service provider is optionally a company or a person capable of providing such services, namely performing time-based tasks associated with management of intellectual property rights. For example, the service provider is optionally capable of providing services, such as reminding a service allocator regarding performance of the time-based task; and providing deliverable (to the service allocator) associated with such time-based task, which is explained in greater detail hereinafter.

The system of the present disclosure further comprises a server. The server is communicably coupled to the at least one communication device of the at least one service allocator and the at least one communication device of the at least one service provider through a communication network. In the present embodiment, the server is configured to include a service module, which is optionally associated with the at least one service provider. The service module is also associated with the at least one service allocator. Specifically, the IP management module and the service module are collectively configured to manage the time-based tasks associated with intellectual property services. In one embodiment, the service module is optionally stored in the communication device of the service allocator (instead of the server).

In an embodiment, the network used to communicably couple the at least one communication device associated with the at least one service allocator, the at least one communication device associated with the at least one service provider, and the server, includes, but is not limited to, Local Area Networks (LANs), Wide Area Networks (WANs), Metropolitan Area Networks (MANs), Wireless LANs (WLANs), Wireless WANs (WWANs), Wireless MANs (WMANs), the Internet, second generation (2G) telecommunication networks, third generation (3G^{®}) telecommunication networks, fourth generation (4G^{®}) telecommunication networks, and Worldwide Interoperability for Microwave Access (WiMAX^{®}) networks.

In operation, the service allocator populates and/or enters intellectual property related data in the communication device associated with the service allocator. The communication device associated with the service allocator is configured to be connected to an aforementioned network. In an embodiment, the service allocator optionally receives the intellectual property related data from an intellectual property office.

In an embodiment, the term *"intellectual property related data"* optionally includes information such as an attorney docket number, inventor details (such as, a name, an address, a citizenship and so forth), a title, an application type (such as a provisional or a non-provisional in case of patents), an entity size (such as, a micro entity, a small entity and a large entity), a subject matter type (such as design, utility and so forth), a priority information, communication details (such as an email id), attorney details (such as, a name, a registration number, an address, a contact number and so forth), an application as filed, information about preliminary amendments, a filing receipt, signed documents (such as an oath and declaration form) and so forth. Moreover, the intellectual property data includes all dates (or timelines) associated with any task to be performed for managing the intellectual property services.

In another embodiment, intellectual property related data optionally also comprises applications related to a new content against which an intellectual property protection is sought. For example, the new content includes a non-provisional patent application prepared on the basis of a provisional patent application, a design patent application, a trademark application and so forth.

In an embodiment, the IP management module (stored in the communication device associated with the service allocator) is configured to share the entire or a part of the intellectual property related data, through the network, to the server. Furthermore, the server (or service module) is optionally accordingly configured to populate a database of the server with such intellectual property related data.

In an embodiment, the service module (stored in the server) is optionally configured to populate a database with an intellectual property related data comprising at least a first deadline date and a deadline type, associated with a time-based task.

In an embodiment, the server is configured to provide an access, to the intellectual property related data populated by the service allocator, to the at least one service provider. Specifically, the server is configured to provide the access of the intellectual property related data to the at least one service provider by registering the at least one service provider with the server. For example, the at least one service provider optionally registers using service provider details (name, ID, passwords) with the help of the service module.

In an embodiment, the term *"time-based task"* used herein relates to any task or activity which is initiated and completion of such activity is time bound. In the present embodiment, the term *"time-based tasks"* are associated with tasks related to securing and managing intellectual property services or rights. In another embodiment, the time-based task optionally includes communication with an examiner or communication with a third party, for example, a client.

In one embodiment, the time-based task optionally includes a reminder for performing such time-based task. The reminder is optionally in a form of a notification email or a notification message for performing the time-based task. For example, the reminder optionally includes a notification related to filing a complete patent application based on a provisional application thereof, or a notification related to filing a PCT (Patent Cooperation Treaty) patent application based on a complete patent application.

In another embodiment, the time-based task comprises deliverable associated with such time-based task. For example, the deliverable optionally includes, but is not limited to, forms associated with the intellectual property related data, applications associated with the intellectual property related data, and responses to shortcomings associated with the forms and the applications.

In an embodiment, the forms associated with intellectual property related data include standard forms which optionally contains aforementioned intellectual property related information. For example, the forms include, but are not limited to, an application filing form, a response filing form, a fee form, a patent office record updation (namely, *"updating*") form, and so forth. In an embodiment, the applications are optionally related to a new content against which an intellectual property protection is sought. For example, the new content includes a non-provisional patent application prepared on the basis of a provisional patent application, a design patent application, a trademark application and so forth. In an example embodiment, the responses to shortcomings associated with the forms and the applications comprise making corrections of errors made while filing such forms, for example, correcting the spellings, correcting the address and so forth. Furthermore, responses to shortcomings associated with the forms and the applications optionally also include responses to an office action or an examination report.

According to an embodiment, the time-based task are optionally associated with a deadline, namely a latest time or a date for completing and/or doing a time-based task. Furthermore, there are optionally multiple deadlines associated with a time-based task, namely due to lengthy and continuous nature of tasks related to securing and maintaining intellectual property rights.

In an embodiment, multiple deadlines associated with a time-based task potentially mutually differ in nature and therefore have different deadline types. Typically, a deadline type is optionally at least one of a critical deadline, an important deadline and a follow-up deadline. For example, a critical deadline is optionally a non-extendable deadline, for example, a 12 month deadline for filing of a non-provisional patent application from a date of filing of a provisional patent application. Furthermore, an important deadline is optionally, or is optionally not, extendable, for example, a deadline for payment of fee. Moreover, a follow-up deadline is optionally an internal deadline used by an individual or an organization for monitoring the progress of tasks related to securing and maintaining intellectual property rights.

According to an embodiment, the server (or the service module stored on the server) is configured to calculate a second deadline based on the first deadline. The server is configured to analyze the intellectual property related data (namely, the first deadline date and a deadline type, associated with a time-based task) to calculate the second deadline. In an example, the second deadline (based on the first deadline) is optionally calculated using an algorithm. For example, while filing a non-provisional application from a provisional application, the first deadline is optionally considered as being 12 months from the priority date of the provisional application, whereas the second deadline is optionally calculated as being 9 months from the priority date of the provisional application. In the present embodiment, the second deadline is earlier than the first deadline. In other words, the second deadline acts as safety check to meet the first deadline. For example, the second deadline acts a reminder for doing any time-based task having the first deadline.

According to one embodiment, after calculation of the second deadline, the server is configured to wait for a pre-determined time (namely, until the arrival of the second deadline). Thereafter, the server optionally sends a reminder to the at least one service allocator and/or to the at least one service provider regarding the second deadline.

According to another embodiment, the IP management module (communicably coupled to the service module) is optionally also configured to wait for the pre-determined time and thereafter send a reminder to the at least one service allocator and and/or to the at least one service provider.

In an embodiment, the pre-determined time for which the server (or the service module) is configured to wait is optionally less than the predetermined time for which the IP management module is configured to wait. In other words, the server (or the service module stored on the server) is configured to send the reminder earlier than the IP management module. For example, the server is optionally configured to send the reminder to the at least one service allocator and/or to the at least one service provider after 8 months from a priority date (in case of conversion of a provisional application to a non-provisional application), whereas the IP management module is configured to send at least one re-reminder to the at least one service allocator after 9 months from the priority date.

In an embodiment, the at least one service provider, on receiving the intellectual property related data, analyses the received data. Furthermore, the server (or the service module) is configured to form a request for a service based on the deadline type (associated with the received data). Specifically, the at least one service provider registered with the server forms the request for the service based on the deadline type.

In an embodiment, a "request for service" refers to a proposal for performing a particular service related to a time based task. In an example, the *"request for service"* optionally includes a request for filing a complete application (for a provisional application), filing a patent cooperation treaty (PCT) application (for a complete application) or national-phase filing in various jurisdiction. Furthermore, the *"request for service"* also includes information regarding timeline and service charges to be proposed by the service provider.

In an embodiment, after formation of the request for service, the at least one service provider sends the request for service to the service allocator via the server (or the service module). In an embodiment, such request for service is optionally in a form of a letter, multimedia content, an email, rendered content on communication devices, and so forth.

In an embodiment, the server (and/or IP management module) is configured to provide a rendered content to the service allocator (based on the request for service). For example, the rendered content optionally includes a deadline reminder, a case number, intellectual property related data for the case number, and a request for a service based on the deadline type. In an embodiment, the rendered content further includes at least one button to make communication between the service allocator and at least one service provider. For example, a button can be used to make communication regarding PCT application filing, another button can be used to make communication regarding Europe application filing, and another button can be used to make communication regarding Chinese filing and so forth. In an embodiment, the rendered content also includes a button for instructing the at least one service provider, by the service 20 allocator, to contact a client directly.

In an embodiment, after receiving the request the service allocator optionally then accepts or rejects the request, and accordingly the at least one service provider optionally waits for the approval of the request.

In another embodiment, the IP management module is configured to collect the service request from the service provider, and forward the request to an in-house Intellectual Property Rights (IPR) council for performing the time-based task.

In an embodiment, after receiving the request for service, if the service allocator approves the request, the service allocator prepares a service description related to the request. The service description optionally includes instructions given by the service allocator to the at least one service provider for carrying out the time-based task. For example, the service description includes, but is not limited to, an instruction regarding a portion of or an entire time-based task to be performed, a service fee provided by the service allocator to the service provider for carrying out the time-based task and so forth.

In one embodiment, after preparation of the service description, the service allocator sends the service description to the server. The server accordingly is optionally configured to receive the service description related to the request for a service, and the at least one service provider optionally then accesses the server to receive the service description related to the request.

The server is further configured to make a communication using the received service description. In an embodiment, the communication is a back and forth communication between the at least one service allocator and the at least one service provider. The communication comprises approval for the request for the service. Specifically, the at least one service provider acknowledges the acceptance or rejection of performing the time-based task (namely, whether or not the service provider can perform the time-based task) based on the service description provided by the service allocator. In an embodiment, the at least one service provider can communicate with the service allocator for negotiating the timeline and the service fee (decided by the service allocator).

In an embodiment, making the communication comprises receiving multiple approvals, from multiple service providers, based on the received service description. Specifically, the service allocator optionally receives the request for a same service from the multiple service providers. In such instance, the service allocator selects a service provider from the multiple service providers, which is optionally based upon bidding. For example, the service providers optionally bid for providing the services to the service allocator, and the service allocator optionally selects an appropriate service provider with the most suitable bid (meeting timeline and service charges specified by the service allocator).

The server is further configured to perform the time-based task by the second deadline. Specifically, the at least one service provider performs/executes the time-based task by the second deadline using the received service description, namely the service provider optionally sends a reminder for performing the time-based task, and/or optionally sends the deliverable associated with the time-based task. Moreover, the at least one service provider optionally sends an acknowledgement to the service allocator about completion of the time-based task.

In an embodiment, the server (or the service module) is further configured to calculate a third deadline based on the performed time-based task. Specifically, if the time-based task is associated with multiple timelines, the time-based task are optionally associated with multiple deadlines. For example, if the time-based task has been completed by the second deadline the third deadline are optionally calculated to complete the time-based task. A particular example for such time-based task optionally includes responding to an examination report (issued by the patent office), which includes multiple deadlines (having different types, such as critical, important, and follow-up).

In an embodiment, the service allocator upon completion of the time-based task optionally updates the IP management module regarding completion of such time-based task. Accordingly, the service allocator optionally clears the reminders/re-reminders from the IP management module. Alternatively, the IP management module is optionally configured to clear automatically the reminders/re-reminders on its own based on the received update from the service allocator.

In another embodiment, the IP management module is further configured to update the server (or the service module) regarding completion of the time-based task. The server (or the service module) is then configured to clear the reminders from its database based on the received update from the IP management module.

The present disclosure provides a method and system for managing a time-based task such as a task involved in a documentation lifecycle to secure and maintain intellectual property rights. The method and system described in the present disclosure enables in sharing of intellectual property related information, which is typically unavailable in public domain, between service allocators and service providers. Therefore, the sharing of information related to the time-based task facilitates timely management of resources for completion of the task before a deadline. Furthermore, the method and system of the present disclosure are flexible enough to accommodate the time-based tasks having critical deadlines, such as close deadlines or immovable deadlines. Moreover, the method and system of the present disclosure enables in clearing reminders/re-reminders after completion of the time-based tasks, and thereby reducing communication load to the service allocator.

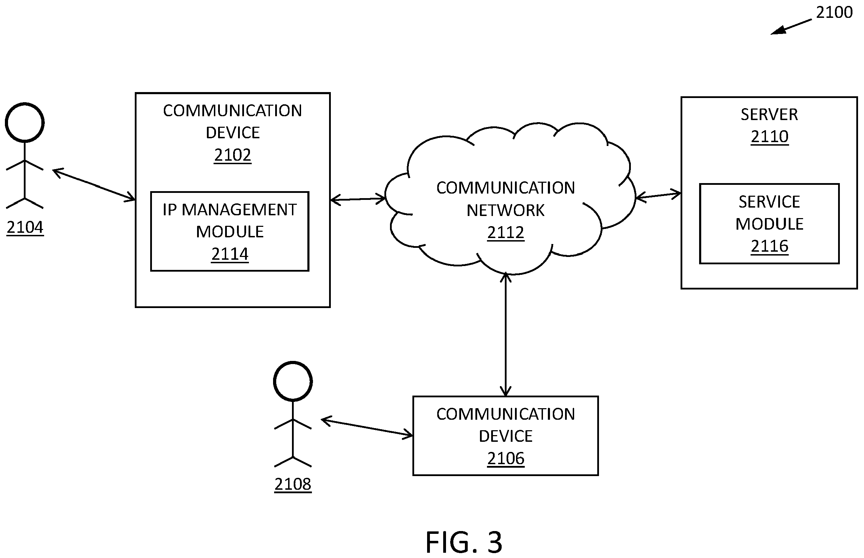

Referring to FIG. 3, there is shown a schematic illustration of a system **2100** for managing a time-based task, in accordance with an embodiment of the present disclosure. The system **2100** comprises at least one communication device, such as a communication device **2102,** associated with at least one service allocator, such as a service allocator **2104.** Furthermore, the system **2100** also comprises at least one communication device, such as a communication device **2106,** associated with at least one service provider, such as a service provider **2108.** The system **2100** further comprises a server **2110** communicably coupled to the communication device **2102** and the communication device **2106** via a communication network **2112.** As shown, the communication device **2102** includes an IP management module **2114** and the server **2110** includes a service module **2116.**

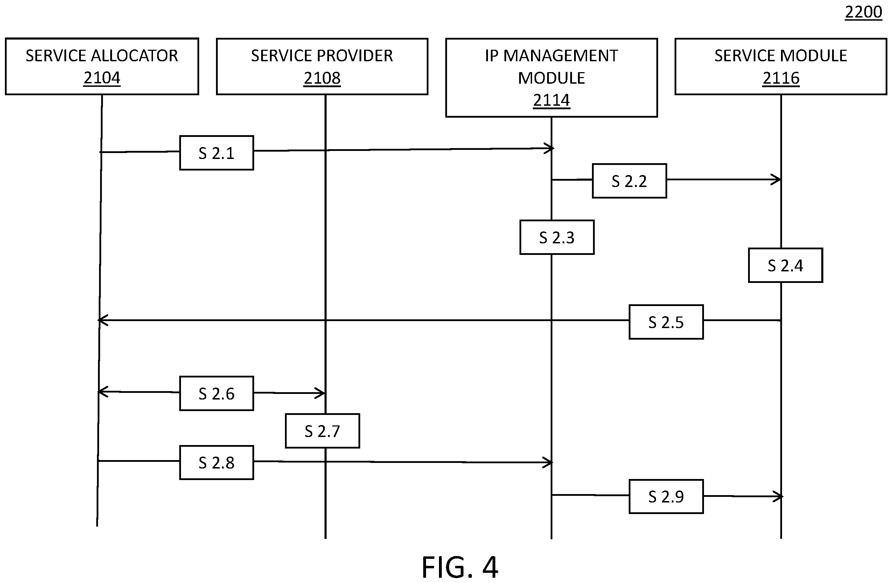

Referring to FIG. 4, there is shown an illustration of operational steps **2200** of a system, such as the system **2100** of FIG. 3, for managing a time-based task, in accordance with an embodiment of the present disclosure. At a step S 2.1, the IP management module **2114** is populated with an intellectual property related data by the service allocator **2104.** The intellectual property related data includes at least a first deadline date and a deadline type, associated with the time-based task. At a step S 2.2, entire or a part of the intellectual property related data populated in the IP management module **2114** is replicated to a service module **2116.** At a step S 2.3, a second deadline is calculated based on the first deadline by the IP management module **2114.** Similarly, at a step S 2.4, a second deadline is calculated based on the first deadline by the service module **2116.** At a step S 2.5, a request for a service based on the deadline type, is sent by the service module **2116** to the service allocator **2104.** At a step S 2.6 communications are made between the service allocator **2104** and the service provider **2108.** For example, a service description related to the request is received by the service provider **2108** from the service allocator **2104.** Furthermore, a communication is made between the service allocator **2104** and the service provider **2108** using the received service description, namely approval of the request based on the service description. At a step S 2.7, the time-based task is performed at the second deadline. At a step S 2.8, the IP management module **2114** is updated regarding completion of the time-based task by the service allocator **2104.** At a step S 2.9, the service module **2116** is also updated regarding the completion of the time-based task by the IP management module **2114.**

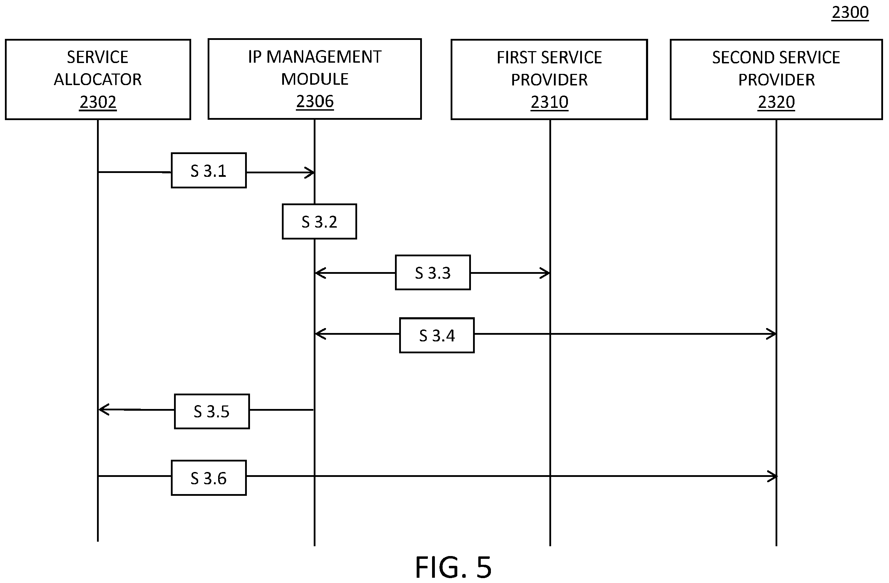

Referring to FIG. 5, there are shown operational steps **2300** of a system, such as the system **2100** of FIG. 3, for managing a time-based task, in accordance with another embodiment of the present disclosure. In the present embodiment, the IP Management module **2306** also possesses inherent properties of a service module (such as the service module **2116** shown in FIGS. 3 and 4). At a step S 3.1, the IP Management module **2306** is populated with an intellectual property related data by the service allocator **2302.** The intellectual property related data comprises at least a first deadline date and a deadline type, associated with a time-based task. At a step S 3.2, the intellectual property related data is analyzed and a second deadline is calculated based on the first deadline by the IP Management module **2306.** At steps S 3.3 and S 3.4, the IP Management module **2306** requests information from a first and second service provider **2310, 2320.** The information includes a request for service based on intellectual property related data. The requests for services, received in the steps S 3.3 and S 3.4 by the IP management module **2306** from multiple service providers, are optionally for a same service (or for different services). At a step S 3.5, a communication related to approvals for services from multiple service providers, is received by the service allocator **2302.** At a step S 3.6, the selection of a service provider from multiple service providers is performed by the service allocator **2302,** and a service is ordered from the service allocator **2302** to the second service provider **2320.**

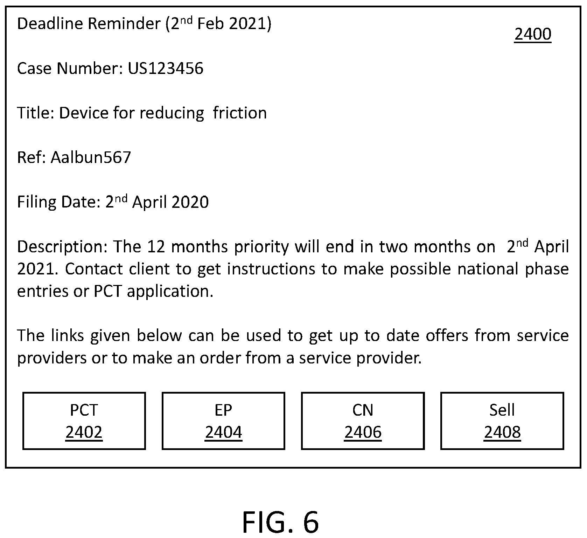

Referring to FIG. 6, there is shown a schematic illustration of a user interface **2400** rendered on a communication device (such as the communication device **2102,** shown in FIG. 3) associated with a service allocator (such as the service allocator **2104,** shown in FIG. 3), in accordance with an embodiment of the present disclosure. As shown, the user interface **2400** includes rendered content (related to the intellectual property related data), such as a deadline reminder, a case number, intellectual property related data for the case number, and a request for a service based on the deadline type. The user interface **2400** also includes buttons **2402, 2404,** and **2406** to make communication between the service allocator (such as the service allocator **2104,** shown in FIG. 3) and the service provider (such as the service provider **2108,** shown in FIG. 3). For example, in FIG. 6, the button **2402** can be used to make communication regarding patent cooperation treaty (PCT) application filing, the button **2404** can be used to make communication regarding Europe (EP) application filing, and the button **2406** can be used to make communication regarding Chinese (CN) filing. The user interface **2400** also includes a button (Sell) **2408** which allows the service allocator to establish a direct contact between the service provider and a client.

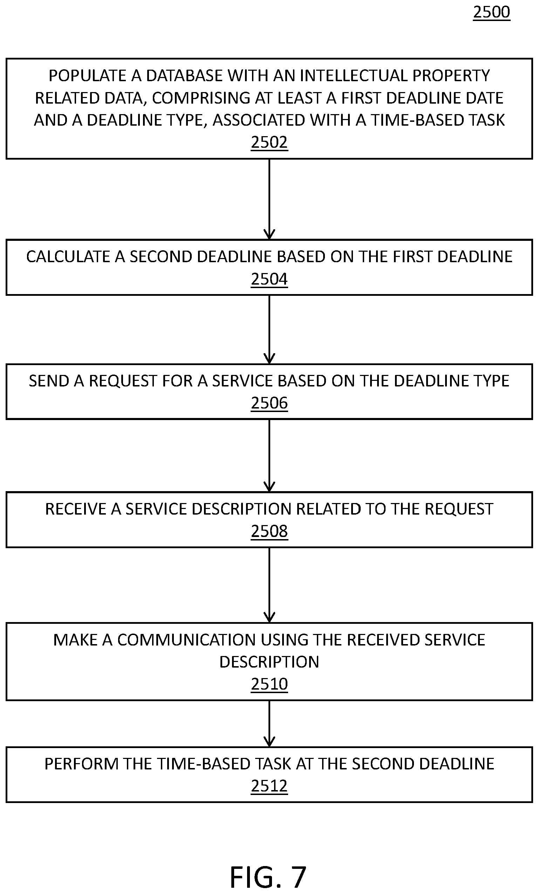

Referring to FIG. 7, there are shown steps of a method **2500** of managing a time-based task, in accordance with an embodiment of the present disclosure. Specifically, the method **2500** as illustrated include steps of managing the time-based task, explained in conjunction with FIGS. 3 to 6. At a step **2502,** a database is populated with an intellectual property related data, comprising at least a first deadline date and a deadline type, associated with the time-based task. At a step **2504,** a second deadline is calculated based on the first deadline. At a step **2506,** request for a service based on the deadline type is sent. At a step **2508,** a service description related to the request is received. At a step **2510,** a communication is made using the received service description. At a step **2512,** the time-based task is performed at the second deadline.

The steps **2502** to **2512** are only illustrative and other alternatives can also be provided where one or more steps are added, one or more steps are removed, or one or more steps are provided in a different sequence without departing from the scope of the claims herein. For example, the method **2500** further comprises providing access, to the intellectual property related data populated by a service allocator, to at least one service provider. Moreover, the method **2500** comprises selecting a service provider from the multiple service providers by the service allocator. The method **2500** also comprises forming the request for the service based on the deadline type.

According to an aspect of the present disclosure, there is provided a method of using a resource management system, for example implemented as an intellectual property (IP) management system, to allocate resources for a given task, characterized in that the method includes steps of:
(i) populating a first database with intellectual property related data in relation to the given task, wherein the intellectual property (IP) related data comprises at least a first deadline date and a first deadline type;
(ii) calculating a second deadline based on the first deadline;
(iii) forming a request for a service based on the first deadline type;
(iv) receiving a service description related to the request; and
(v) executing a communication using the received service description and sending the communication at the second deadline.

The resource management system is of advantage in that the method enables the given task to be implemented more effectively and efficiently, for example in a substantially automated manner.

Optionally, the method includes executing the communication in the step (v) automatically via one or more active button fields included in a graphical user interface presentation of the request.

Optionally, the method includes determining the second deadline using an artificial intelligence computing algorithm implemented using data processing hardware.

Optionally, in the method, the intellectual property related data in relation to the given task is provided as metadata derived from one or more patent authority databases.

According to another aspect, there is provided a resource management system, for example implemented as an intellectual property (IP) management system, that is operable to allocate resources for a given task, characterized in that the resource management system is operable:
(i) to populate a first database with intellectual property related data in relation to the given task, wherein the intellectual property (IP) related data comprises at least a first deadline date and a first deadline type;
(ii) to calculate a second deadline based on the first deadline;
(iii) to form a request for a service based on the first deadline type;
(iv) to receive a service description related to the request; and
(v) to execute a communication using the received service description and sending the communication at the second deadline.

Optionally, the resource management system is operable to execute the communication in (v) automatically via one or more active button fields included in a graphical user interface presentation of the request.

Optionally, the resource management system is operable to determine the second deadline using an artificial intelligence computing algorithm implemented using data processing hardware.

Optionally, in the resource management system, the intellectual property related data in relation to the given task is provided as metadata derived from one or more patent authority databases.

In overview, the present disclosure is concerned with a resource management system, in particular with an IP management system that is operable to provide users with an option to request for offer on each stage of a patenting process to obtain patent rights on a basis of a corresponding patent application. The resource management system can, for example, be regarded as being a form of docketing system for managing patent and other intellectual property documents during a lifetime of a given patent application from initially generating an invention report forming a basis for the given patent application, filing the given patent application with one or more patenting authorities, prosecution the given patent application and maintaining patent rights that are eventually granted in respect of the given patent application.

Embodiments of the present disclosure can be considered to be a form of patent docketing system that is configured to provide patent application related information to a service provider. Such information is, for example, metadata related to patent filing; such metadata includes, for example, one or more priority dates, one or more application numbers, title, assignee, inventor names, name of attorney firm, and so forth.

The service provider is able use aforementioned information to make an offer / proposal regarding how the service provider is able to help in respect of a deadline relating to the aforesaid given patent application.

Next, example embodiments of the present disclosure will be described in greater detail.

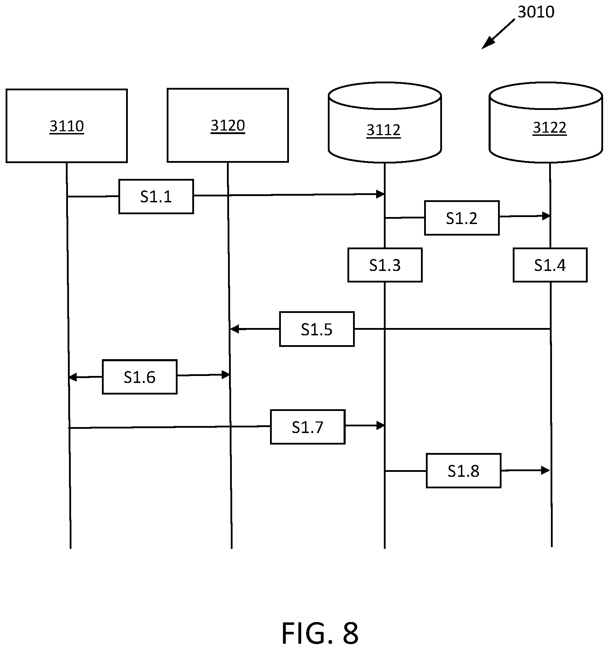

Referring to FIG. 8, there is provided an illustration of steps of a method employed in embodiments of the present disclosure; the method is indicated generally by **3010.** The steps of the method are, for example, implemented using one or more software products executable upon computing hardware, wherein the software products implement one or more artificial intelligence algorithms. In a step S1.1 of the method **3010,** an attorney or paralegal of a patent attorney company **3110** enters a new case in an IP (intellectual property) management system **3112.** The new case has corresponding data associated therewith.

In a step S1.2 of the method **3010,** a part of the data, or all of the data, related to the new case is replicated to a service system **3122.**

In steps S1.3 and S1.4 of the method **3010,** the IP management system **3112** and the service system **3122** wait until a predetermined moment of time has elapsed, for example 9 months from a priority date of the new case. In this example, the service system **3122** is operable, namely configured, to send a reminder to an attorney or paralegal of a service provider **3120,** when 8 months have passed from the aforesaid priority date; this is represented by a step S1.5 of the method **3010.** Thereafter, the IP management system **3112** is operable, namely configured, to send a reminder when 9 months have elapsed from the aforesaid priority date. Since metadata related to the patent filing is now known by the service provider **3120,** the service provider **3120** is then able to contact the patent attorney company **3110** in a step S1.6 of the method **3010** to offer services such as making a PCT filing of the priority filing or helping with national phase entries based on the priority filing.

If the action is then done, the patent attorney company in a step S1.7 of the method **3010** marks the deadline as being done, namely completed, (namely, for example, clearing the 9 months reminder, thus reducing communication load from the IP management system **3112** to the patent attorney company **3110).** The IP management system **3112** is optionally operable to send metadata related to completing the deadline to the IP management system **3112,** namely in a step S1.8 of the method **3010.**

In a second example embodiment of the IP management system **3112,** the IP management system **3112** is operable, namely configured, to send same or similar deadline reminders to the service provider as it is sending to the patent attorney company.

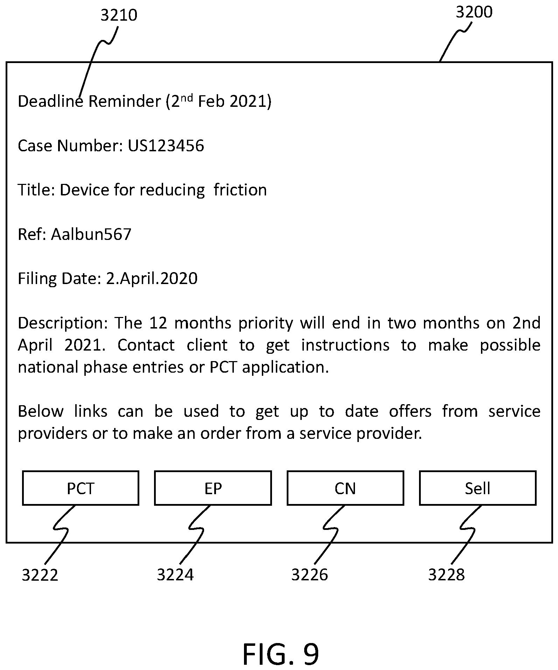

Referring next to FIG. 9, in a third example embodiment of the IP management system **3112,** the IP management system **3112** is operable, namely configured, to embed in the reminders it sends to the patent attorney company a link or other automatic access to the service provider's offering. Thus, in FIG. 9, there is shown a user interface 200 that is rendered in a computing device provided with a graphical screen, such as a laptop computer, a smartphone, a web pad, a phablet computer or similar; the user interface **3200** is provided with rendered content **3210** showing a deadline reminder of a patent application filed on a date of 2^{nd} April 2020. Thus, a 12-months priority for the application ends on a date of 2^{nd} April 2021. The reminder is dated 2^{nd} Feb 2012, thus leaving 2 months to close the deadline. Based on the embodiment, the reminder has set of buttons **3222, 3224, 3226** for the patent attorney company receiving the reminder, or viewing it online, to ask for one or more offers from service providers or to issue an order of the work from service providers. Additionally, one or more service requests to the service provider can be to contact the client to get instructions, if the patent attorney company desires the service provider to contact the client directly via a button **3228.**

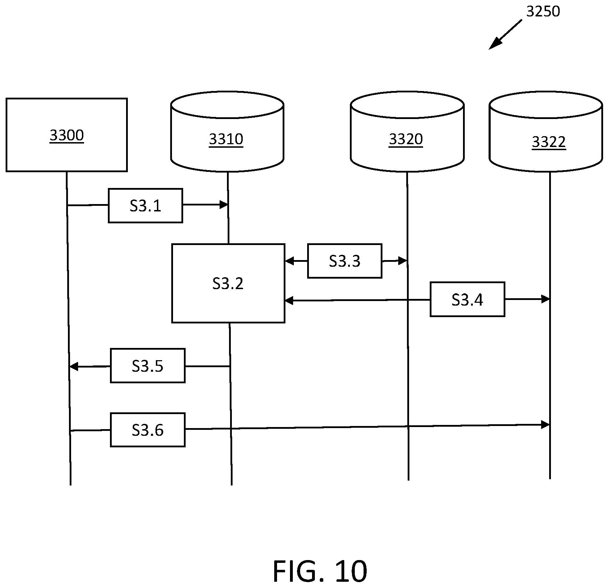

Furthermore, in FIG. 10, there is provided an illustration of steps of a method, indicated generally by **3250,** implemented in a system of the present disclosure. A patent attorney company **3300** sets up a new case in an IP management system **3310** in a step S3.1.

In a step S3.2 of the method **3250,** the IP management system analyses the new case based on metadata associated with the new case. In steps S3.3 and S3.4 of the method **3250,** the system requests information from service provider systems **3320** and **3322** for implementing a service related to the metadata. For example, service provide system **3320** can be asked to perform a PCT filing, and the service provider system **3322** to file the application to China, for example, including preparing translations to Chinese, for example achieved using an artificial intelligence translation engine. Alternatively, both of the service provider systems **3320** and **3322** can be instructed for mutually similar services such as performing a PCT filing, namely to get bidding offers on such work. Information from the service provider systems **3320** and **3322** are used as basis for making the offer/purchase now buttons **3228.** In a step S3.5 of the method **3250,** the links/buttons related to rendering information are provided to the attorney company **3300.**

In a step S3.6 of the method **3250,** the attorney uses a button to order a service from the service provider system **3322.**

In a fourth example embodiment of the present disclosure, the IP Management system **3310** is used by an in-house IPR council of a commercial corporation. When a given deadline is approaching, the IP management system **3310** collects one or more service offers related to the given deadline; the IP management system **3310** then thereafter presents the service offers to the in-house IPR council, for example when alerting the given deadline to the in-house IPR council.

It will be appreciated that embodiments of the present disclosure are capable of providing an IP management system that is operable to provide users with an option to request for offer in respect of each stage of a patenting process in a respect of a corresponding patent case.

According to another aspect of the present disclosure, there is provided a task control system for processing one or more service requests provided by one or more members, clients or customers, wherein the task control system includes a server arrangement coupled via a communication network to one or more user interfacing devices, characterized in that the task control system is operable to provide a task processing platform:
(i) for analyzing the one or more service requests from one or more members, clients or customers;
(ii) for selecting one or more suitable contractors for processing information associated with the one or more service requests to generate one or more corresponding work products; and
(iii) for checking the one or more work products for conformity with the one or more service requests and supplying, when in conformity with the one or more service requests, to the one or more members, clients or customers.

Optionally, for the task control system, the task processing platform is operable to provide a market in which the one or more service requests are matched to one or more contractors that are most suitable for executing work associated with the one or more service requests.

Optionally, the task control system is operable to match the one or more service requests with one or more contractors whose performance characteristics are best suited for implementing work associated with the one or more service requests.

More optionally, for the task control system, the performance characteristics relate to at least one of: a capability to implementation of the one or more service requests within a defined time period, a capability to handle technical subject matter associated with the one or more service requests, a cost of handling the one or more service requests.

Optionally, for the task control system, the server arrangement includes a computing engine for providing artificial intelligence processing of the one or more service requests and information associated with the one or more service requests. More optionally, for the task control system, the information associated with the one or more service requests includes one or more invention reports.

More optionally, for the task control system, the computing engine for providing artificial intelligence processing is operable to employ a configuration of pseudo-analog variable-state machines having states defined by a learning process applied to the pseudo-analog variable-state machines. More optionally, for the task control system, the configuration of pseudo-analog variable-state machines is implemented by disposing the pseudo-analog variable-state machines in a hierarchical arrangement, wherein pseudo-analog variable-state machines higher in the hierarchical arrangement are operable to mimic behavior of a human claustrum for performing higher cognitive functions when processing information associated with the one or more service requests and for performing quality checking of the one or more work products generated by the one or more contractors in response to executing the one or more service requests.

More optionally, for the task control system, the configuration of pseudo-analog variable-state machines is operable to perform at least one of:
(a) translating text from one language to another;
(b) performing novelty searches in databases based on identifying essential features in information associated with the one or more service requests;
(c) automatically generating one or more claim sets for the one or more contractors;
(d) quality assuring work products generated by the one or more contractors in response to processing the one or more service requests, wherein quality assuring includes checking for antecedent basis for terms, consistent claim structure, consistent use of terms and phrases;
(e) analyzing earlier prior art documents relevant to the one or more work products; and
(f) devising inventive step arguments to defend against identified earlier prior art.

Optionally, for the task control system, the task control platform is operable to encrypt the work products and/or the one or more service requests by using a combination of data file partitioning into data packets, encryption of the data packets to generate encrypted data packets, and obfuscation of the encrypted data packets to generate obfuscated encrypted data packets for transmission within the communication network of the task control system, wherein obfuscated encrypted data packets approach a one-time-pad degree of data security.

According to another aspect of the present disclosure, there is provided a method of using a task control system for processing one or more service requests provided by one or more members, clients or customers, wherein the task control system includes a server arrangement coupled via a communication network to one or more user interfacing devices, characterized in that the method includes arranging for the task control system to provide in operation a task processing platform:
(i) for analyzing the one or more service requests from one or more members, clients or customers;
(ii) for selecting one or more suitable contractors for processing information associated with the one or more service requests to generate one or more corresponding work products; and
(iii) for checking the one or more work products for conformity with the one or more service requests and supplying, when in conformity with the one or more service requests, to the one or more members, clients or customers.

Optionally, the method includes operating the task processing platform to provide a market in which the one or more service requests are matched to one or more contractors that are most suitable for executing work associated with the one or more service requests.

Optionally, the method includes operating the task control system to match the one or more service requests with one or more contractors whose performance characteristics are best suited for implementing work associated with the one or more service requests. More optionally, in the method, the performance characteristics relate to at least one of: capability to implementation of the one or more service requests within a defined time period, capability to handle technical subject matter associated with the one or more service requests, cost of handling the one or more service requests.

Optionally, the method includes arranging for the server arrangement to include a computing engine for providing artificial intelligence processing of the one or more service requests and information associated with the one or more service requests.

More optionally, in the method, the information associated with the one or more service requests includes one or more invention reports.

More optionally, the method includes arranging for the computing engine to provide artificial intelligence processing by employing a configuration of pseudo-analog variable-state machines having states defined by a learning process applied to the pseudo-analog variable-state machines. More optionally, the method includes implementing the configuration of pseudo-analog variable-state machines by disposing the pseudo-analog variable-state machines in a hierarchical arrangement, wherein pseudo-analog variable-state machines higher in the hierarchical arrangement are operable to mimic behavior of a human claustrum for performing higher cognitive functions when processing information associated with the one or more service requests and for performing quality checking of the one or more work products generated by the one or more contractors in response to executing the one or more service requests.

More optionally, the method includes operating the configuration of pseudo-analog variable-state machines to perform at least one of:
(a) translating text from one language to another;
(b) performing novelty searches in databases based on identifying essential features in information associated with the one or more service requests;
(c) automatically generating one or more claim sets for the one or more contractors;
(d) quality assuring work products generated by the one or more contractors in response to processing the one or more service requests, wherein quality assuring includes checking for antecedent basis for terms, consistent claim structure, consistent use of terms and phrases;
(e) analyzing earlier prior art documents relevant to the one or more work products; and
(f) devising inventive step arguments to defend against identified earlier prior art.

Optionally, the method includes operating the task control platform to encrypt the work products and/or the one or more service requests by using a combination of data file partitioning into data packets, encryption of the data packets to generate encrypted data packets, and obfuscation of the encrypted data packets to generate obfuscated encrypted data packets for transmission within the communication network of the task control system, wherein obfuscated encrypted data packets approach a one-time-pad degree of data security. According to a third aspect, there is provided a computer program product comprising a non-transitory computer-readable storage medium having computer-readable instructions stored thereon, the computer-readable instructions being executable by a computerized device comprising processing hardware to execute a method of the second aspect.

In overview, the present disclosure provides a task control system:
(a) for receiving input information, for example in a form of one or more invention reports provided as data files;
(b) for temporally coordinating various data processing algorithms for processing the input information to generate output data, wherein the data processing algorithms are at least in part implemented using human effort, although artificial intelligence algorithms are optionally also employed; and
(c) for outputting the output data, for example to patent authorities and/or to one or more parties that generated the input information.

In comparison, a data encoder, for which patent rights are often granted by the USPTO, UKIPO, EPO and similar, is operable to receive input information as data, to apply various data processing algorithms to the input information to generate corresponding encoded data, and then to output the encoded data. In both situations, namely embodiments of the present disclosure and the encoder, manipulation of data bits occurs for producing the output data.

Embodiments of the present disclosure provide a unified data processing platform, for example implemented by using a plurality of user devices, a server arrangement and data communication network, wherein data exchanges occur in operation between the plurality of user devices and the server arrangement via the data communication network. The unified data processing platform replaces a mixture of manual and machine-based processes that are conventionally employed when processing input information to generate output data that is capable of giving rise to intellectual property rights, for example patent rights. Moreover, the unified data processing platform performs various operations that do not occur in conventional known systems for data processing, for example data transformation.

Embodiments of the present disclosure provide a docketing system for managing patent and other intellectual property documents during a lifetime of one or more patent applications, from initial generation of invention reports (in a form of input data), filing the one or more patent applications with patent granting authorities, prosecution the one or more patent applications through substantive examination, and maintenance of granted patent rights derived from the one or more patent applications.

Embodiments of the present disclosure, as well as providing technical benefits by processing data, for example *mutatis mutandis* as for an encoder processes input data to generate corresponding encoded output data, are capable of building branding and global patent businesses. Conventional patent agent businesses correspond to a *"cottage industry",* resulting in high cost of final product, low throughput, inconsistent quality of implementation and general inefficiency. Embodiments of the present disclosure are capable of revolutionizing such an existing regime to provide highly cost-effective, quality-assured end product in a form of processed data derived from corresponding input data. Optionally, artificially intelligence algorithms implemented using computing engines in server arrangements are used when performing such beneficial data transformation in embodiments of the present disclosure. The artificially intelligence algorithms are operable to employ simulations of pseudo-analog variable-state machines, wherein weightings of pseudo-states of the variable-state machines are programmed according to exposure of the pseudo-analog variable-state machines to a spectrum of example input data and *a priori* examples of corresponding output data that is required. Optionally, several hierarchical layers of such pseudo-analog state-variable machines are employed wherein outputs from lower layers of pseudo-analog variable-state machines are fed as input to higher layers of pseudo-analog variable-state machines. By such an arrangement, the server arrangement is capable of functioning, for example, both as an analog of a human visual cortex as well as high cognitive human thought functions that occur typically in the claustrum of the human brain.

Digital variable-state machines are known and comprise a data memory whose data bus outputs are selectively fed back to drive selected address lines of the data memory, whereas other address lines are used for receiving external input data. A subset of the data bus outputs are used as output data from the variable-state machines. Each given state of the data memory has a certain rating, namely "strength" or "weighting", that is dynamically varied as a function of frequency in which the data memory is switched to the given state. For example, switching of states within the digital variable-state machine occurs along learnt "state trajectories" or "state threads" that selects branching state with highest relative "strengths". States of the digital variable-state machine are temporally slowly reduced to a lower "strength" when they are infrequently invoked within the digital variable-state machine; by analogy, such behavior is akin to synapses in the human brain atrophying when infrequently or weakly triggered, whereas frequently-triggered synapses of nerve cells are strengthen and enlarged as a result of being frequently triggered. The aforementioned platform of the present disclosure uses a digitally simulated version of such a hierarchical configuration of pseudo-analog variable-state machines that are operable to simulate human cognitive behavior when processing invention reports as input data; in a manner akin to operation of the human brain, the pseudo-analog variable-state machines beneficially operate with n switching thresholds defining n+1 switching states, wherein an integer n is in a range of 5 to 10; such a range simulates a multiplicity of synapse triggering states associated with neurons and their axons in the human brain. Optionally, the pseudo-analog variable-state machines employed to implement a task control system pursuant to the present disclosure have mutually different numbers of switching thresholds. Optionally, pseudo-analog variable state machines at a lowest layer of the aforementioned hierarchical configuration are used to interpret the input information, wherein the neural networks are operable to perform a matched correlation with learned data patterns, for example in a manner in which the human visual cortex is operable to provide rapid image processing. To achieve a satisfactory degree of simulation of human cognitive behavior, the server arrangement employs a constellation of interlinked reduced-instruction-set-computers (RISC) in an array formation for executing data processing, linked to circa 100 to 1000 Terrabytes of data memory. Optionally, there are employed in a range of 1000 to 100000 such reduced instruction-set-computers (RISC) in the array formation.

Such a configuration of pseudo-analog variable-state machines is capable, for example, for translating entire patent applications from one language to another within seconds, potentially making the London Agreement for European granted patent texts potentially irrelevant, as the cost of translation from one language to another using such artificial intelligence becomes insignificant. Moreover, a configuration of pseudo-analog variable-state machines is also capable of checking consistency of antecedent basis in patent applications, configuring patent applications as well as automatically handling analysis of novelty and proposing inventive step defense strategies. In a manner akin to other contemporary industries, a task control system thereby obtained is capable of revolutionizing patent procurement, namely a business activity that is present run largely as a *"cottage industry"* with high costs and highly paid patent attorneys. Thus, embodiments of the present disclosure represent *"disruptive technology"* is respect of conventional known practice.

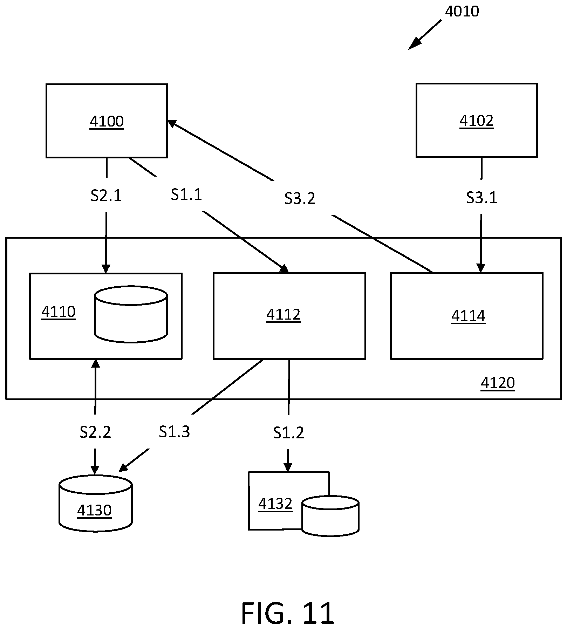

Practical embodiments of embodiments of the present disclosure will next be described in greater detail. In FIG. 11, there is shown an illustration of a task control system pursuant to the present disclosure; the task control system is indicated generally by **4010.** Conveniently, the task control system **4010** is implemented to provide an AalbunIP platform **4120** that is used by a given member **4100.** The given member **4100** is, for example, an intellectual property representative serving a particular geographical region and/or a particular sector of industry; for example, the given member **4100** can be a qualified patent attorney, but need not be necessarily so. The member **4100** can send service requests, in a step S1.1, via a Workzone module **4112** of the task control system **4010.** Moreover, the Workzone module **4112** is used in operation to manage that request to ensure that is provided to a contractor **4132,** in the step S1.2, and to ensure that a corresponding patent application produced by the contractor **4132,** in the step S1.2, is filed, in a step S1.3, (namely submitted) to a patent office database **4130.** The service request, in the step S1.1 includes, for example, an invention report generated collaboratively between the given member **4100** and one or more inventors. The one or more inventors, optionally their employer, referred to a being a *"client"* or *"customer",* is assumed by the task control system **4010** to be the owner of the invention described in the invention report, unless information is provided to indicate otherwise. Optionally, the task control system **4010** performs an analysis of content of the invention report to generate a modified analyzed form of the invention report to send to the contractor **4132,** for example with essential features for claims identified, a draft claim set provided automatically, and a template from which the contractor **4132** is able to work. Optionally, the task control system **4010** performs a preliminary novelty search in respect of the invention to help guide the contractor **4132,** by comparing groups of essential features extracted from the invention report with occurrences of identical or similar essential features occurring in earlier published documents and/or data base records of public disclosures (for example lectures, scientific literature, newspaper articles and such like).

Optionally, the task control system **4010** is operable to present to the aforementioned configuration of pseudo-analog variable state machines the invention report included in the service request and the drafted patent application provided by the contractor **4132,** for allowing the configuration of pseudo-analog variable state machines to perform drafting style quality control checks, and eventually to learn how the contractor **4132** has tackled drafting of the patent application, with an aim eventually of at least partially automating the drafting work executed by the contractor **4132.**

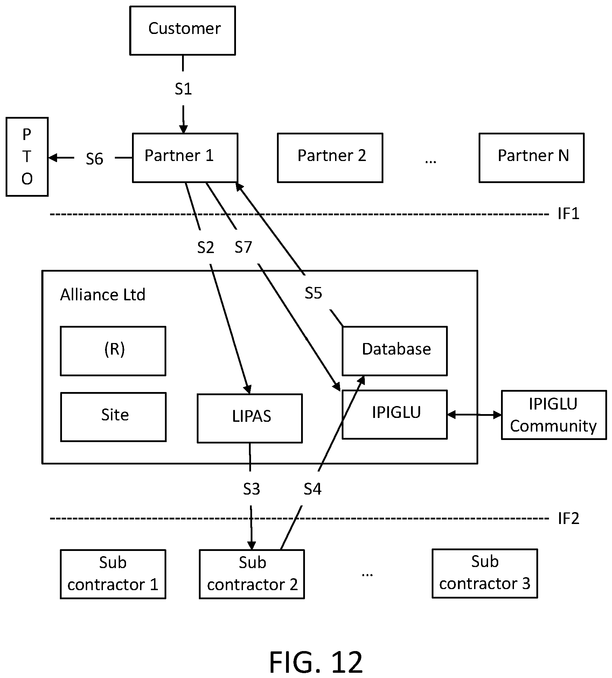

Optionally, the member **4100** is able to manage an intellectual property portfolio, in a step S2.1, with one or more patent applications and/or one or more granted patents, by employed an IP Management system **4110.** The IP Management system **4110** is used also to maintain data integrity, in a step S2.2, by accessing data from the patent office database **4130.** Beneficially, a given client **4102** can reach, in a step S3.1, namely contact, the member **4100** via an Aalbun.com website **4114,** in a step S3.2, to enable the member **4100** to obtain more sales. The website **4114** is operable to provide for secure encrypted communication and also provides an easy-to-use graphical user interface (GUI). Such a manner of operation is to be compared with slow, laborious and costly meetings that inventors conventionally have with patent attorneys, in present known *"cottage industry"* type patent firms and practices. Optionally, the contractor **4132** is capable of informing the task control system **4010** a time-scale in which the contractor **4132** is able to process work tasks, for example tackling prompt premium-cost work or relatively longer timescale standard work. By being highly responsive, the contractor **4132** can elect to earn more money by providing fast-turnaround (that is more stressful to the contractor **4132)** or earn less money by providing a standard-turnaround (that is less stressful and allows the contractor **4132,** for example, to fit in with personal family commitments). Optionally, the contractor **4132** can elect to be provided by the task control system **4010** with a mixture of fast-turnaround tasks and standard-turnaround tasks, to ensure that the contractor **4132** has no *"downtime"* when not earning money, as the supply of invention reports through the task control system **4010** inevitably experiences fluctuations, depending upon and commercial activities of clients or customers of the task control system **4010.** Moreover, by matching those contractors **4132** that are prepared to work for less money with clients or customers that are prepared to allow a longer lead time for work to be completed, for example by prudent longer-term planning, the task control system **4010** is able to deliver IP services to such clients or customers at a considerably more cost effective manner than feasible in conventional *"cottage industry"* type patent practice. Referring next to FIG. 12, there is shown an illustration of an alternative implementation of the task control system **4010.** In the alternative task control system **4010** of FIG. 12, in a step S1, a customer or client provides a service request. In a step S2, the service request is sent to LIPAS = Workzone (namely corresponding to the Workzone module **4112** of FIG. 11).

In a step S3, work defined by the service request is allocated to a contractor, for example a subcontractor, for example a patent attorney working at a remote location and coupled into the task control system **4010** via a data communication network, for example Internet operating under TCP/IP. Communications to and from the contractor are beneficially implemented using encryption and decryption tools, more preferably using a combination of data packet partitioning, data packet encryption and encrypted data obfuscation, namely approaching a *"onetime-pad'* level of data security that is substantially unbreakable, even using colossal computing resources available to governmental eavesdropping organizations. Such security is required because governments cannot be trusted, in that systematic industrial espionage can be performed by governments whilst falsely alleging by such governments a need to eavesdrop data for "war on terror" reasons. When the task control system **4010** of FIG. 12 is operable to delegate work to contractors associated with the task control system **4010,** the task control system **4010** is operable to perform following checks:
(i) to check whether or not a given potential contractor to employ for implementing the work has a conflict of interest with other work that has been allocated by the task control system **4010** to the given contractor;
(ii) to check whether or not the work matches with a competence area of the given contractor; and
(iii) to check pricing offered to the customer or client via its associated member matches a cost regime requested by the given contractor.

The checks (i) to (iii) are optionally performed using lookup-up tables that are updated regularly by contractors when offering their services to the task control system **4010.** When the checks (i) to (iii) have been performed by the task control system **4010,** the task control system **4010** then proceeds to award to work associated with the service request.

In a step S2, in FIG. 12, a completed work product generated by the given selected contractor, in response to processing the service request, is uploaded to a workzone database, as shown.

In a step S5, in FIG. 12, the member, for example in consultation with the client or customer, downloads the work product and verifies that it is implemented correctly, pursuant to the service request. If the work product is implemented correctly, then, in a step S6, in FIG. 12, the member files the work product in a patent office, for example at UKIPO, USPTO, EPO, PRV, Patentstryet or similar.

In a step S6, in FIG. 12, the member updates a docketing system IPIGLU to record in the task control system **4010** that the work product has been filed. The task control system **4010,** from information pertaining to a nature or type of the workpackage, defines a timeline in its records for automatically contacting the member to send the member reminders about forthcoming procedural steps, for example publication at circa 18 months from filing, request for examination, renewals payments, declaration of inventorship, office action deadlines, payment of grant fees, any requirement of translations, end-of-priority year and so forth. The task control system **4010** also provides a front end (site) for the member, for example to allow the member to embed information related to the member, to the customer or client and so forth.

The task control system **4010** is capable of being used as disruptive technology for changing conventional IP practice, that is mostly operated at present times as a *"cottage industry"* with high costs, low productivity and inconsistent quality, into a streamlined highly-cost-effective process and service. Beneficially, technical data processing arrangement utilizing advanced artificial intelligence (Al) algorithms based on computing engines that simulate human cognitive processes are employed; for optimal execution of such algorithms, computing hardware used for implementing embodiments of the present invention are specially adapted for processing efficiently high complex content associated with IPR. Thus, embodiments of the present disclosure relate to computing architectures that provide enhanced data processing of certain specific categories of data; conventional computing hardware (for example, classic von Neumann computer architectures (namely, "*Princeton architecture*") and conventional RISC computer architectures) used for such Al purposes would be prohibitively expensive and unwieldy to program.

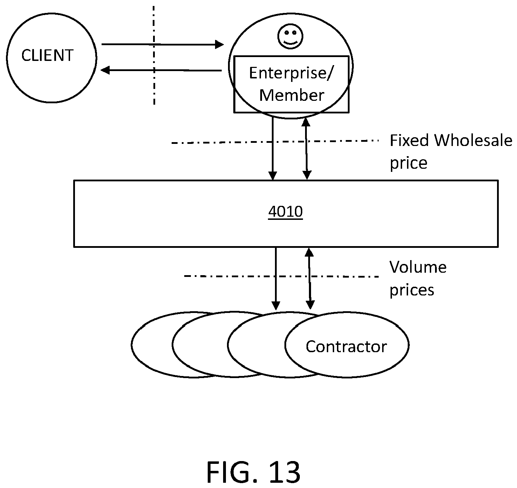

Referring to FIG. 13, the task control system **4010** enables a wholesale market to be provided for processing service requests and for generating corresponding work products, for example using a combination of work implemented by a given contractor selected and artificial intelligence computing engines, as aforementioned, employed within the task control system **4010,** for example located at its server arrangement. Moreover, substantive examination of patent applications at various patent offices can be made more efficient by the work products being implemented pursuant to best practice defined by the patent offices. Optionally, contractors employed by the task control system **4010** are rated for their performance, responsiveness, quality of work, and a record compiled by the task control system **4010;** such monitoring enables the task control system **4010** to design customized mentoring courses and training for the contractors for their personal development and skills improvement. Such personal support is to be juxtaposed with conventional IP practice, operated in a "*cottage industry*" manner, that often overlooks a need for staff development and training. Thus, the task control system **4010** is capable of providing a commercial market in which clients, customers or members provide offers for work via service requests to be implemented, and the task control system **4010** is operable to match the service requests with one or more contractors that are capable of implementing the service requests in a most efficient, cost-effective and verifiable high quality manner. The task control system **4010** is operable to employ software products to enable it to perform its functions. The software products include, for example, a computer program product comprising a non-transitory computer-readable storage medium having computer-readable instructions stored thereon, the computer readable instructions being executable by a computerized device comprising processing hardware to execute methods of the present disclosure.

It will appreciated from the foregoing that the data management system **1010** for handling one or more documents, the system **2100** for managing a time-based task, and the IP management system **3112** and the service system **3122,** and the task control system **4010** are susceptible to being provided by an artificial intelligence cognitive engine, as described in brief overview in the foregoing. Moreover, it will be appreciated that a conventional computing arrangement configured generally in a von Neumann architecture would not have sufficient processing power for implementing the systems **1010, 2100, 3112, 3122** and **4010.** Thus, the present disclosure also provides an advanced computing architecture that functions in a very different manner to known computing systems, wherein the advanced computing architecture employs one or more artificial intelligence (Al) algorithms implemented in an advanced logic architecture. Furthermore, it will be appreciated that a central concept of the present disclosure is an artificial intelligence cognitive engine, for example implemented as a configuration of Silicon integrated circuits, that is able to process data in a manner that would be impossible using conventional computing hardware. Moreover, it will be appreciated that data provided to the artificial intelligence cognitive engine are, at least in part, provided by user interaction with the artificial intelligence cognitive engine. *Mutatis mutandis,* it will be appreciated that patent authorities throughout the World regularly grant patent rights for data encoders that merely switch bits of data about when encoding data, even when the data to be encoded is potentially of an abstract nature, for example a pdf image of a commercial invoice. Such encoders are often implemented using software executable upon conventional computing hardware. In contradistinction, the present disclosure is primarily concerned with an artificial intelligence cognitive engine implemented as a novel configuration of electronic hardware that is operable to function in a manner that is completely different to that of conventional computing hardware, and is thereby capable of providing types of data processing at a seemingly high cognitive level comparable to human cognitive processes that would be impossible to achieve using known conventional computing arrangements. Moreover, it will be appreciated that major computer chip manufacturing companies frequently achieve patent protection for new data processing architectures. A fact that the present disclosure describes using aforesaid artificial computing engines in commerce does not constitute non-patentable subject matter in a relation to the artificial computing engines as computing hardware.

Earlier attempts to implement artificial intelligence machines using conventional computing devices (for example, employing von Neumann architecture) have been hampered by an expectation that such computing devices are required to be defined and deterministic in the logic, even if "*fuzzy logic*" is employed. In contradistinction, the human brain does not employ such a deterministic structure, but can be trained to exhibit a pseudo-logical deterministic behavior. Moreover, a non-deterministic computing architecture is completely different to a known von Neumann type data processing architecture. In order to mimic operation of the human brain when performing high-level cognitive tasks, for example drafting and substantively examining patent application texts in relation to one or more complex prior art documents, it is not surprising the aforementioned artificial intelligence cognitive engine has some components of it structure that are akin to anatomical structures of the human brain.

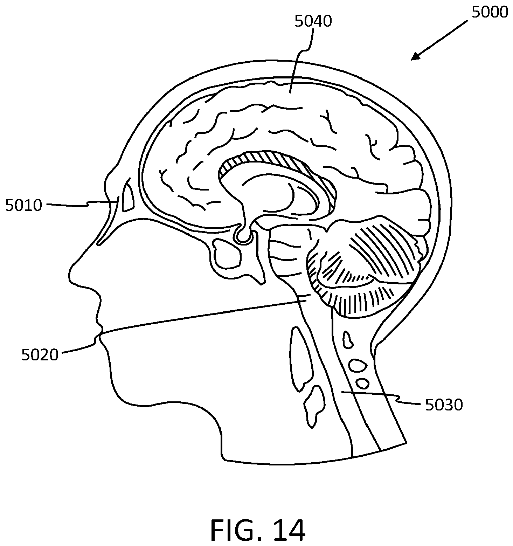

Referring next to FIG. 14, an illustration of a human brain is indicated generally by **5000.** The human brain **5000** is protected within a skull and is operable to receive input information from two eyes **5010,** and is operable to receive and send information via a brain stem **5020** to a spinal cord **5030.** Moreover, the brain stem **5020** is operable to provide nutrients and oxygen to the human brain **5000,** and also remove metabolic debris from the human brain **5000.** The brain includes an arrangement of neurons supported upon the brain step **5020,** wherein the arrangement of neurons is formed as a layer that is folded into deep fissures **5040** that extend from an outer surface region of the human brain **5000** to its interior. Within the human brain **5000** is a region referred to as the "*claustrum*". It is known from anatomical tests that temporary disablement of the claustrum, for example via electrical stimulation, can cause the brain to switch between a cognitively aware state and a sleeping state. Moreover, it is also known that human brains lacking deep fissures results in individuals exhibiting a low degree of cognitive intelligence (namely, "*mentally handicapped*").

The arrangement of neurons (namely, "*nerve cells*") is known from anatomical studies to be structured in layers. Moreover, individual neurons **5500** are found to include a cell body ("*soma*") **5610,** an elongate axon **5620,** and various dendritic structures; in a given human being, elongate axons of neurons along a spinal cord are found to extend a full length of the spinal cord. Moreover, the axons have one or more buddings ("*telodendria*") **5630** that are terminated at their distal ends with neuro-emitters. Moreover, the cell body **5610** is provided with neuro-receptors. When metabolizing, neurons **5600** maintain a potential difference between an interior region thereof and an outer surface of their cell membranes. Moreover, when a given neuron is triggered, the potential difference is momentarily discharged, such that a discharge wave propagates along an axon of the given neuron. When the discharge wave reaches the distal ends of the one or more buddings **5630,** they are operable to release neuro-emitters. Moreover, triggering of the neuron is achieved when a sufficient amount of neuro-emitters are received at the cell body **5610.**

When a human brain **5000** performs an immediate reactive function, the arrangement of neurons are triggered by input information and generates within a second duration a corresponding response, depending upon a configuration in which the neurons are disposed. However, long-term memory and taught skills are enshrined in aforementioned one or more buddings **5630** from elongate axons **5620.** On account of the one or more buddings **5630** being integral grown extensions of the elongate axons **5620,** long-term memory and taught skills are only achieved by repetitive stimulation of given combinations of neurons. However, when not stimulated, the one or more buddings **5630** can atrophy, resulting in a loss of information in long-term memory. Moreover, the human brain **5000** employs processes to cause atrophy of relatively unstimulated buddings **5630** during sleep, so as to achieve well defined pseudo-analog states when the human brain **5000** is required to perform cognitive tasks when in a cognitively aware state. Moreover, although not conventionally appreciated, the human brain **5000** is capable of growing new neurons, for example neuron regeneration after stroke or impact injury. Furthermore, it will be appreciated that human beings that suffer from autism tend to have less budding from their elongate axons **5620,** resulting in more effort being required to remember information, resulting in cognitive interaction problems with other human beings, but better information retention when remembered due to thicker and more persistent budding being invoked from elongate axons **5620** of their brain neurons; such autism can be an inherited genetic characteristic that manifests as less efficient protein synthesis for budding along the elongate axons **5620.** Such a cause for autism is not generally appreciated in the scientific literature, such that the present disclosure provides some profound insight into this issue of autism.

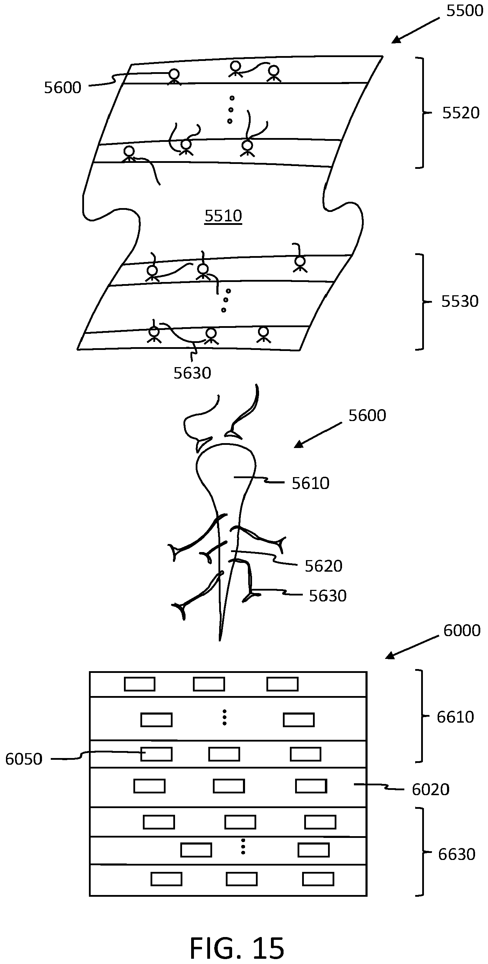

As aforementioned, the neurons of the human brain **5000** are arranged in layers, wherein the layers are configured approximately symmetrical about the fissures **5040.** Moreover, it will be appreciated that deepest parts of the fissures **5040** are spatially closest to the aforesaid claustrum of the human brain **5000,** such that higher level cognitive functions are associated more with the deepest parts of the fissures **5040** than substantially where the fissures are terminates at an outer region of the human brain **5000.** Referring to FIG. 15, there is shown a schematic illustration of a slice **5500** through the neuron layers of the human brain 5000, wherein a central layer **5510** is buffered between a plurality of input layers **5520** and a plurality of output layers **5530.** One or more input layers **5520** remote from the central layer **5510** are coupled to sensory arrangements of a human body associated with the human brain **5000.** Likewise, one or more output layers **5530** remote from the central layer **5510** are coupled to muscle arrangement of the human body associated with the human brain **5000.** The remote layers **5520, 5530** generally have a structure that is influenced by other parts of the human body, for example a visual cortex of the human brain **5000** maps spatially to a retina of an eye of the human being. However, the central layer **5510** has an axon/budding interconnection structure that is substantially of an entropic abstract nature, although studies have indicated that the interconnectivity may be fractal in nature, and determined by leaning experience to which the human brain **5000** has been exposed. In operation, the neurons of the layers **5510, 5520, 5530** function as a hierarchical arrangement of pseudo-analog variable state machines that are operable to switch between states depending upon a temporally preceding state and immediate input information supplied to the layers **5510, 5520, 5530;** wherein the input information can include sensed environmental input and also output information from the layers **5510, 5520, 5530** that are fed back into the layers **5510, 5520, 5530.**

Moreover, the pseudo-analog states are defined by the one or more buddings **5630** from the elongate axons **5620** of neurons, wherein the one or more buddings **5630** can grow and/or atrophy with time depending upon a frequency of stimulation of the one or more buddings **5630** and/or an amplitude of stimulation of the one or more buddings **5030.** Such growth and/or atrophying of the one or more buddings **5630** results from applying tuition of training to the human brain **5000.** Such appreciation of operation of the human brain **5000** is generally not appreciated in scientific publications, and represents insight that is special to the present disclosure.

By analogy, the artificial intelligence cognitive engine of the present disclosure is based upon a layered configuration of data processors; the artificial intelligence cognitive engine is indicated generally by **6000** in FIG. 15. The layered configuration is arranged to mimic the layers **5510, 5520, 5530** of the human brain **5000,** but are also modified to be better suited to IPR tasks peculiar to IPR (intellectual property right) procurement, for example as described in the foregoing. The layered configuration of the cognitive engine **6000** includes one or more input layers **6010,** a central layer **6020** and one or more output layers **6030.**

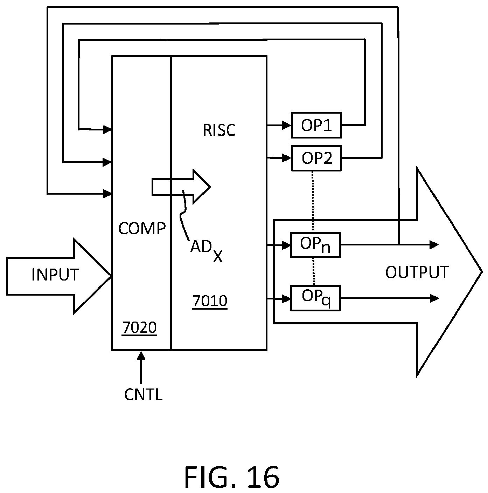

Each layer **6010, 6020, 6030** includes an arrangement of data processors **6050,** for example RISC processors with associated data memory, clocking at a high frequency of several GHz or faster; optionally, for example, the RISC processors are implemented using proprietary ARM Cortex-A73^{®} Silicon integrated circuit devices (see https://www.arm.com/products/processors/cortex-a/cortex-a73-processor.php). The arrangement of data processors **6050** of each layer is operable to function as a pseudo-analog variable state machine, or a plurality of such pseudo-analog variable state machine. Each pseudo-analog variable state machine is configured in a manner shown schematically in FIG. 16; the pseudo-analog variable state machine is indicated generally by **7000.**

The pseudo-analog variable state machine **7000** is operable in a pseudo-analog manner, but is susceptible to being implemented using binary digital technology, for example by utilizing a RISC processor, executing software. The machine **7000** includes a state generator **7010** having continuously-variable outputs OP_{1,x} to OP_{n,x}, wherein n is an integer of value 1 or greater, for example 16-bit values; the machine **7000** has x states in a range of 1 to m. The outputs OP_{1,x} to OP_{n,x} are fed back to a comparator arrangement **7020** that compares these outputs OP_{1,x} to OP_{n,x} with a threshold value to generate corresponding binary address lines AD₁ to ADₙ. Moreover, the machine **7000** includes a direct input "INPUT" from one or more other pseudo-analog variable state machines or information input to the comparator arrangement **7020** to provide additional address lines ADₙ₊₁ to AD_{n+q}. The binary address lines AD from the comparator arrangement **7020** are used as address lines for the state generator **7010** that is operable to record values of OP₁ to OPₙ against and output values "OUTPUT" for each combination of values, namely state x, of the address lines AD. In other words, the values of OP_{1,x} to OP_{n,x} and "OUTPUT" are dependent upon corresponding values of the address lines AD. In operation, the values OP_{1,x} to OP_{n,x} are dynamically adjustable depending upon how often, and for how long a temporal duration, their corresponding address lines AD are maintained, to mimic the aforementioned one or more buddings **5630.** In an event that a given state x defining AD is infrequently invoked, the values of OP_{1,x} to OP_{n,x} of the given state x are allowed to reduce, mimicking atrophying of budding of axons. A control signal CNTL is used to switch the machine **7000** into different modes of operation, for example as described for implementing various aspects of the present disclosure described in the foregoing.

In a learning mode, the machine **7000** is permitted to adjusts its values of OP_{1,x} to OP_{n,x} for a given state x; conversely, in an operational mode when providing IPR services, the values of OP_{1,x} to OP_{n,x} are permitted to change the values of OP_{1,x} to OP_{n,x} temporally in a more gradual manner than in the learning mode. The values of OP_{1,x} to OP_{n,x} for each state x are recorded in data memory of the RISC processor.

It will be appreciated that the artificial intelligence cognitive engine **6000** in FIG. 15 potentially includes thousands of the machines **7000** in its associated layers **6010, 6020, 6030,** namely in a hierarchical manner. The artificial intelligence cognitive engine **6000** can be trained so that IPR text input present at the "INPUT" of the machines **7000** of the input layers **6010** is transformed or translated into corresponding text output at the "OUTPUT" of the output layers **6030.** The control signal CNTL can be used to control what type of cognitive function is performed by the artificial intelligence cognitive engine **6000.**

The artificial intelligence cognitive engine **6000** can be taught to perform sequential tasks, but is not clocked in a sense of a conventional processor. Just like the human brain **5000,** the artificial intelligence cognitive engine **6000** is capable of dwelling in a given state until a new task is presented to the artificial intelligence cognitive engine **6000** or a required control signal is input to the artificial intelligence cognitive engine **6000.** Moreover, the artificial intelligence cognitive engine **6000** is programmed, namely taught, in manner that is completely different to programming a conventional data processor (that is implemented in a deterministic manner). Teaching the artificial intelligence (Al) cognitive engine **6000** is akin to teaching a normal cognitive human being and can be implemented using patent texts, patent diagrams, prior art documents, substantive examination reports and similar. Moreover, the artificial intelligence cognitive engine **6000** can be taught to perform sequential customer interfacing functions.

It will be appreciated that the cognitive engine **6000** is taught in a manner of a human brain, in that sequences of state in the state machines **7000** of the cognitive engine **6000** are reinforced, namely the states are more easily assumed in operation, when the sequences of states result in a positive or useful outcome. Such reinforcement can be achieved by momentarily halting operation of the cognitive engine **6000** and working the state machines **7000** backwards from their states that end in a positive outcome towards earlier states that are likely to lead to such a positive outcome, and biasing coefficients associated with the sequence of states to render the sequence more easily assumed. Such a manner of operation is akin to what occurs in the human brain during sleep when budding or dendritic growth from axons of neurons occur, from brain states that give rise to dopamine or similar release locally within the human brain. Moreover, such a process is also akin to giving a pet animal an edible treat when the pet animal successfully completes a behavioral training exercise, wherein the edible treat triggers dopamine release in a brain of the pet animal and reinforces cognitive states associated with the behavioral training exercise; for such reason, the human brain effectively has to suppress its claustrum activity during sleeping to allow sequences of neuron states resulting in positive outcomes to be reinforced. Repeating behavioral training exercises with the pet animal reinforces such behavioral patterns as the dendritic or budding growth from axons of neurons become more substantial through biological cell growth. It will be appreciated that such dendritic or budding growth in the human brain involves growth biological structures that are potentially only a few nanometres in diameter, for example, and a few microns in length.

It will be appreciated that one or more outputs OP_{1,x} to OP_{n,x} of a given machine **7000** can be provided as at least part of an input "INPUT" of other such machines **7000** in close spatial proximity to the given machine **7000;** optionally, an equivalent of spatial positions can be allocated to the machines **7000** so that the spatial position of the given machine **7000** relative to its neighboring machines **7000** can be defined; such equivalent of spatial positions mimics neighboring spatial proximity of groups of neurons in the human brain **5000,** wherein mutually neighboring groups of neurons interact more strongly in respect of budding than groups of neurons that are mutually spatial remote.

In a manner akin to the human brain **5000,** the artificial intelligence cognitive engine **6000** is asynchronous in its operation but is operable to handle temporal sequences of tasks; however, it will be appreciated that the RISC processors implementing the machines **7000** can be synchronous clocked devices, for example clocked at 2.7 GHz.

It will be appreciated that the artificial intelligence cognitive engine **6000** can be constructed relatively compactly into a cabinet that has a spatial volume of circa 1 m³, provided with forced cooling to remove circa 3 kW of heat when in operation. Moreover, the artificial intelligence cognitive engine **6000** is optionally implemented using in a range of 100 to 10000 RISC processors, for example as aforementioned, wherein the RISC processors function to provide in a range of thousands to millions of the machines **7000.** Each of these machines **7000** are implemented, for example, as depicted schematically, in FIG. 16, and are operable to switch between states in a pseudo-analog manner (as opposed to strictly defined states in a binary digital arrangement) wherein the states can have mutually different stabilities, and the states themselves can vary during operation as the machines **7000** *"learn"* new information through being switched through their different states in a pseudo-analog manner. Moreover, on account of the hierarchical interconnected nature of the machines **7000** of the artificial intelligence cognitive engine **6000,** it will be appreciated that a first given machine **7000** switching a given state in its plurality of possible states, causes triggering of one or more other machines **7000,** that in turn, when in certain of their states can trigger yet other machines **7000** to change their states. Moreover, it will be appreciated that the potential states of the machines **7000** is dynamically variable with time as the artificial intelligence cognitive engine **6000** is taught new procedures, exposed to new tasks, exposed to new documents and so forth.

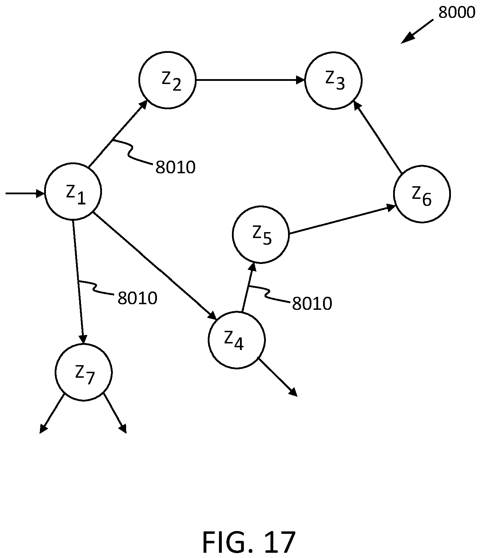

Referring to FIG. 17, there is shown a simple schematic variable state diagram indicated by **8000** for a given machine **7000.** The diagram **8000** includes a plurality of states denoted by Z₁ to Z*ₚ*, wherein *p* is an integer greater than 1. Eigenvector paths **8010** of easiest transition path link the states Z together, wherein a change of state is triggered in operation depending upon the address lines AD shown in FIG. 16. The address lines AD are determined by the input "INPUT", the control signal CNTL and feedback OP_{1,x} to OP_{n,x}. Moreover, the input "INPUT" is determined by input information (for example, text input material, diagram input material, instructional material, and so forth) provided to the artificial intelligence cognitive engine **6000** and/or from outputs from one or more other machines **7000.** Optionally, a threshold of the comparator arrangement **7020** for switching state of the address lines AD is variable to prevent oscillatory feedback loops occurring within the artificial intelligence cognitive engine **6000.** By analogy, when such oscillatory feedback loops occur in the human brain **5000,** epileptic fits are a result that swamps normal cognitive operation of the human brain **5000.** Contemporary treatment for epilepsy includes medication to reduce signal gain through neurons and/or excision of groups of neurons that tend to exhibit oscillatory feedback behavior.

In FIG. 17, it will be appreciated that, in operation, the states Z and their associated Eigenvector paths **8010** are dynamically changing as the artificial intelligence cognitive engine **6000** learns new facts and skills when in operation, in a manner that mimics operation of the human brain **5000.**

In cost, the artificial intelligence cognitive engine **6000** is susceptible to being constructed for much less than $100, 000 (USB, year 2017 prices), for example incorporating an array of circa 2000 RISC processors and associated data memory. Moreover, when implemented to employ ten's of millions of machines **7000,** the artificial intelligence cognitive engine **6000** is shown to be capable of performing cognitive tasks very rapidly, for example translating a 250-page patent application text from Chinese language to English language within seconds, and using templates and invention notes to draft a patent application of circa 100 pages with 20 diagrams in under 20 seconds. Such performance is capable of making conventional patent attorney practice (namely, aforementioned "*cottage industry*") quite obsolete and excessively expensive for its customers.

Modifications to embodiments of the invention described in the foregoing are possible without departing from the scope of the invention as defined by the accompanying claims. Numerals included within parentheses in the accompanying claims are intended to assist understanding of the claims and should not be construed in any way to limit subject matter claimed by these claims.

## Claims

1. A method of operating a data management system (1010) for handling one or more documents between a plurality of user devices (1110, 1120), wherein the data management system (1010) is operable to manage security levels (L1, L2, L3) in respect of the one or more documents, **characterized in that** the method includes:
(i) receiving a first document;
(ii) setting a first level of security (L3) for the first document to generate a corresponding first encrypted document;
(iii) creating a second document using information derived from the first encrypted document and/or from the first document;
(iv) sending the second document to at least one patent office;
(v) setting a second level of security (L2) for the second document to create a corresponding second encrypted document;
(vi) retrieving publication information related to the second document from the at least one patent office; and
(vii) analyzing the publication information and setting a third level (L1) of security to the second encrypted document in an event that the publication information indicates that the second document is public to create a third encrypted document,
wherein the method includes operating the data management system (1010) to employ data processing hardware including an array arrangement of data processors that are operable to execute one or more artificial intelligence (Al) algorithms for implementing one or more of the steps (i) to (vii).

2. A method of claim 1, **characterized in that** the method includes arranging for the data management system (1010) to include a server arrangement for storing document and encrypted documents, wherein the server arrangement is coupled to the plurality of user devices (1110, 1120) via a data communication network arrangement.

3. A method of claim 1 or 2, **characterized in that** the method includes arranging for the data management system (1010) to use one or more encryption keys that are communicated to or generated by the user devices (1110, 1120) for encrypting and/or decrypting documents.

4. A method of claim 1, 2 or 3, **characterized in that** the method includes arranging for the data management system (1010) to employ an encryption method including partitioning one or more data files into a plurality of data blocks, to encrypt the data blocks to generate corresponding encrypted data blocks and to obfuscate the encrypted data blocks by mutually swapping data therebetween to generate corresponding encrypted data, wherein a data map is also generated to define partitioning, encryption and obfuscation employed to generate the corresponding encrypted data to enable the encrypted data to be subsequently de-obfuscated, decrypted and de-partitioned to regenerate corresponding decrypted data of the one or more data files.

5. A method of claim 4, **characterized in that** the method includes communicating the data map in encrypted form within the data management system (1010).

6. A method of any one of claims 1 to 5, **characterized in that** the method includes providing the user devices (1110, 1120) with detectors for detecting malware present in the users devices (1110, 1120) that is capable of circumventing encryption of data executed by the user devices (1110, 1120).

7. A method of any one of claims 1 to 6, **characterized in that** the method includes arranging for the data management system (1010) to be configured for drafting revising and submitting patent application documents to one or more patent offices.

8. A method of any one of claims 1 to 7, **characterized in that** the method includes arranging for the data management system (1010) to employ the one or more artificial intelligence (Al) algorithms to analyze the publication information and/or to control the levels of security of the data management system (1010), wherein the data management system (1010) is operable to employ a configuration of pseudo-analog variable-state machines having states defined by a learning process applied to the pseudo-analog variable-state machines, and the configuration of pseudo-analog variable-state machines is implemented by disposing the pseudo-analog variable-state machines in a hierarchical arrangement, wherein pseudo-analog variable-state machines higher in the hierarchical arrangement are operable to mimic behavior of a human claustrum for performing higher cognitive functions when processing the publication information and/or controlling the levels of security of the data management system (1010).

9. A computer program product comprising a non-transitory computer-readable storage medium having computer-readable instructions stored thereon, the computer-readable instructions being executable by a computerized device comprising processing hardware to execute a method as claimed in any one of claims 1 to 8.
